# EUROPEAN PATENT SPECIFICATION

(11) **EP 2 584 639 B1**
(45) Date of publication and mention of the grant of the patent: **28.01.2015**
(21) Application number: 12188275.7
(22) Date of filing: 12.10.2012
(51) Int. Cl.: H01M 8/06, H01M 8/04

(54) **Fuel cell system**
Brennstoffzellensystem
Système de pile à combustible

(30) Priority: 17.10.2011 JP 2011227735
(43) Date of publication of application: 24.04.2013
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP); Yasuhara, Kenichiro, Osaka-shi, Osaka (JP); Iwata, Shin, Osaka-shi, Osaka (JP)
(74) Representative: TBK

(56) References cited:
- JP-A- 2006 008 459
- JP-A- 2010 260 772

## Description

### TECHNICAL FIELD

The disclosure generally relates to a fuel cell system. More particularly, the disclosure pertains to a fuel cell system including a desulfurizer.

### BACKGROUND DISCUSSION

A known fuel cell system includes a fuel cell having an anode to which anode gas is supplied and a cathode to which cathode gas is supplied, a reformer for forming the anode gas by reforming source gas, a source gas passage for supplying the source gas to the reformer, a gas conveying source provided at the source gas passage and supplying the source gas to the reformer via the source gas passage, and a desulfurizer provided at the source gas passage and desulfurizing the source gas.

For example, JP2006-008459A (i.e., hereinafter referred to as Patent reference 1) discloses a known fuel cell system in which a first desulfurizer (normal temperature, filled with adsorption desulfurization agent) and a second desulfurizer (hydrodesulfurizer) are arranged in series. A piping diverged at a downstream of a shift portion of a reformer is connected to the first desulfurizer and the second desulfurizer to be arranged therebetween, and mixed gas of the source gas and hydrogen is supplied to the second desulfurizer. According to the construction of Patent reference 1, a timing for the replacement of the desulfurizer is determined on the basis of a cumulative flow rate of source gas.

A dew point which is a typical physical quantity regarding the water vapor content included in the source gas largely influences a performance of the desulfurization agent in the desulfurizer. The higher the dew point of the source gas is, the higher humidity and water vapor content included in the source gas become, thus deteriorating the performance of the desulfurizer. Water may enter into a gas piping due to plumbIng for gas piping or deterioration of the gas piping due to aging degradation. Further, water may temporarily enter the gas piping during the rainy season or the season of melting snow. Once the rainy season or the season of melting snow ends, generally, the dew point of the source gas returns to the normal level. However, the dew point of the source gas flowing into the desulfurizer via the gas piping and the source gas passage may rise because of the temporal ingress of the water to the gas piping. In those circumstances, the desulfurizer may be spoiled, or the desulfurization capacity of the desulfurization agent is impaired before reaching the original remaining lifetime. If that is the case, sulfur compound included as odorant in the source gas may enter a reforming portion and/or a stack to deteriorate catalysts of the deforming portion and the stack.

In order to solve the foregoing drawbacks, a determination processing to determine whether to replace the desulfurizer may be executed on the basis of, for example, a dew point of a source gas, a cumulative operation time from a reference timing, and a cumulative flow amount of the source gas from the reference timing. However, for example, at the plumbing of the gas piping, a dew point of the actual source gas may temporarily and suddenly increase, and further, the dew point of the source gas may be affected by a temporal backflow of the water vapor, for example, from a reformer for steam reforming. Thus, a determination error may possibly occur when conducting a determination processing for replacing the desulfurizer (desulfurization agent) during the actual operation of a fuel cell system. Further, the desulfurizer (desulfurization agent) may be faultily, or erroneously replaced because of the determination error. In those circumstances, the desulfurizer (desulfurization agent) is replaced although the desulfurizer has adequate remaining lifetime, which unnecessarily increases maintenance costs.

A need thus exists for a fuel cell system which contributes to restrain an unnecessary increase of maintenance costs by avoiding a drawback that a desulfurizer is erroneously replaced because of a determination error in spite of an existence of sufficient desulfurization capacity and adequate lifetime of desulfurizer.

The document JP 2010260772 A comprises a fuel reforming apparatus and a fuel cell system.

### SUMMARY

In light of the foregoing, the disclosure provides a fuel cell system according to the independent claim. Advantageous further developments are as set out in respective dependent claims.

In detail, the fuel cell system includes a fuel cell including an anode to which an anode gas is supplied and a cathode to which a cathode gas is supplied, a reformer for forming the anode gas by reforming a source gas, a source gas passage for supplying the source gas to the reformer, a gas conveying source provided at the source gas passage and supplying the source gas to the reformer via the source gas passage, a desulfurizer provided at the source gas passage for desulfurizing the source gas, a sensor detecting a physical quantity related to a water vapor included in the source gas directly or indirectly, and a control portion configured to execute a determination processing for determining whether a replacement of the desulfurizer, or a desulfurization agent contained in the desulfurizer is necessary on the basis of the physical quantity related to the water vapor included in the source gas during an electric power generating operation of the fuel cell system. The control portion is configured to not execute the determination processing when temperature at the desulfurizer is lower than a first predetermined temperature.

Thus, the construction of the disclosure contributes to avoid an erroneous replacement of the desulfurizer because of the determination error at the determination processing for replacing the desulfurizer. Accordingly, erroneous replacement of the desulfurizer due to the determination error despite the desulfurizer including sufficient remaining lifetime and desulfurization capacity can be restrained. Thus, an unnecessary increase in maintenance costs can be restrained.

According to another aspect of the disclosure, the control portion is configured to not execute the determination processing at at least one of following cases: (i) at a warm-up mode at which the fuel cell system raises temperature of the reformer and/or the fuel cell before starting the electric power generating operation although the electric power generating operation is not performed; and (ii) when the source gas does not flow in the source gas passage.

According to the construction of the disclosure, even if the source gas with high dew point level is supplied to the desulfurizer, the outflow of the sulfur component from the desulfurization agent to the downstream can be restrained. Accordingly, it is restrained that the sulfur component affects the reformer and the fuel cell positioned at the downstream of the desulfurizer Further, even when a temporal backflow of the water vapor in the reformer enters the desulfurizer, the water vapor can be adsorbed by the desulfurizer. Thus, the sulfur component adsorbed to the desulfurizer can be restrained from being desorbed. Accordingly, it is restrained that the sulfur component affects the reformer and the fuel cell positioned at the downstream of the desulfurizer.

According to further aspect of the disclosure, when it is determined that a condition for replacing the desulfurizer, or the desulfurization agent is satisfied at the determination processing, the control portion is configured to perform a stop process, to temporarily stop an operation of the fuel cell system, to reactivate the fuel cell system, to re-execute the determination processing, and to output alarm for urging a replacement of the desulfurizer, or the desulfurization agent in a case where it is determined that the condition for replacing the desulfurizer, or the desulfurization agent is satisfied at the re-executed determination processing.

According to the construction of the disclosure, because the alarm for replacing the desulfurizer, or the desulfurization agent is not outputted immediately, an occurrence of the determination error is restrained, and an erroneous replacement of the desulfurizer because of the determination error is restrained.

According to still another aspect of the disclosure, when it is determined that a condition for replacing the desulfurizer, or the desulfurization agent is satisfied at the determination processing, the control portion is configured to temporarily stop an operation of the fuel cell system, to reactivate the fuel cell system after an elapse of a predetermined time from a stopped timing at which the fuel cell system is stopped, to re-execute the determination processing, and to output alarm for urging a replacement of the desulfurizer, or the desulfurization agent in a case where it is determined that the condition for replacing the desulfurizer, or the desulfurization agent is satisfied at the re-executed determination processing.

According to the construction of the disclosure, an occurrence of the determination error is restrained, and an erroneous replacement of the desulfurizer because of the determination error is restrained.

According to further aspect of the disclosure, when it is determined that a condition for replacing the desulfurizer, or the desulfurization agent is satisfied at the determination processing, the control portion is configured to temporarily stop an operation of the fuel cell system, to reactivate the fuel cell system after the operation is stopped, to not execute the determination processing when the fuel cell system is operated in a warm-up mode, to re-execute the determination processing in a state where the operation is transited from the warm-up mode to an electric power generating mode, and to output alarm for urging a replacement of the desulfurizer, or the desulfurization agent in a case where it is determined that the condition for replacing the desulfurizer, or the desulfurization agent is satisfied at the re-executed determination processing.

Thus, the construction of the disclosure contributes to avoid an erroneous replacement of the desulfurizer because of the determination error at the determination processing for replacing the desulfurizer. Accordingly, erroneous replacement of the desulfurizer due to the determination error despite the desulfurizer including sufficient remaining lifetime and desulfurization capacity can be restrained. Thus, an unnecessary increase in maintenance costs can be restrained.

According to still another aspect of the disclosure, when it is determined that a condition for replacing the desulfurizer, or the desulfurization agent is satisfied at the determination processing, the control portion is configured to temporarily stop an operation of the fuel cell system, to reactivate the fuel cell system after the operation is stopped, to not execute the determination processing when temperature at the desulfurizer is lower than the first predetermined temperature, to re-execute the determination processing when the temperature at the desulfurizer is equal to or higher than the first predetermined temperature, and to output alarm for urging a replacement of the desulfurizer, or the desulfurization agent in a case where it is determined that the condition for replacing the desulfurizer, or the desulfurization agent is satisfied at the re-executed determination processing.

Thus, the construction of the disclosure contributes to avoid an erroneous replacement of the desulfurizer because of the determination error at the determination processing for replacing the desulfurizer. Accordingly, erroneous replacement of the desulfurizer due to the determination error despite the desulfurizer including sufficient remaining lifetime and desulfurization capacity can be restrained. Thus, an unnecessary increase in maintenance costs can be restrained.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a fuel cell system according to a first embodiment disclosed here;
Fig. 2 is a graph showing remaining lifetime characteristics of source gas relative to a dew point;
Fig. 3 is a graph showing relationship between temperature of a desulfurizer and water vapor adsorption capacity;
Fig. 4 is a graph showing relationship between temperature of the desulfurizer and adsorption capacity of the desulfurizer;
Fig. 5 is a graph showing changes in the adsorption capacity of the desulfurizer when the temperature of the desulfurizer declines by stopping an operation of the fuel cell system because the desulfurizer is spoiled, or the desulfurization capacity of the desulfurization agent is impaired;
Fig. 6 is a graph showing changes in the adsorption capacity of the desulfurizer when the fuel cell system is reactivated (retry) after the fuel cell system is stopped because the desulfurizer is spoiled, or the desulfurization capacity of the desulfurization agent is impaired;
Fig. 7 is a schematic view of the fuel cell system according to a third embodiment disclosed here;
Fig. 8 is a flowchart for a control law which a control portion executes according to a fourth embodiment disclosed here;
Fig. 9 is a flowchart for a control law which the control portion executes according to a fifth embodiment disclosed here;
Fig. 10 is a flowchart for a control law which the control portion executes according to a sixth embodiment disclosed here; and
Fig. 11 is a schematic view showing an application of a fuel cell system according to the embodiments disclosed here.

### DETAILED DESCRIPTION

A fuel cell includes an anode to which anode gas is supplied and a cathode to which cathode gas is supplied. A reformer generates the anode gas by reforming source gas. A source gas passage is configured to supply the source gas to the reformer. A gas conveying source is provided at the source gas passage and supplies the source gas to the reformer via the source gas passage. For example, a pump, a compressor, or a fan is applied as the gas conveying source. A rotary pump, a reciprocating pump, a diaphragm pump may be, for example, applied as the pump. A desulfurizer is provided at the source gas passage and desulfurizes the source gas. For example, a dew point sensor for detecting a dew point of the source gas supplied to the desulfurizer or a humidity sensor is, for example, applied as a water vapor sensor which detects physical quantities regarding the water vapor contained in the source gas.

Porous material, for example, zeolite, zeolite supporting metal such as transition metal, or activated carbon may be applied as base material for the desulfurization agent contained in the desulfurizer. In many cases, the desulfurization agent includes metal such as transition metal. In those circumstances, alternatively, other than the physical adsorption, chemical adsorption may be additionally applied. At least one of silver, copper, gold, rhodium, palladium, iridium, ruthenium, osmium, nickel, iron, chromium, and molybdenum may be applied as the metal. Further, alloy including equal to or more than two of silver, copper, gold, rhodium, palladium, iridium, ruthenium, osmium, nickel, iron, chromium, and molybdenum may be applied as the metal. Zeolite is a generic term for material having porous crystal structure among aluminosilicate. In those circumstances, either natural zeolite or synthetic zeolite may be applied. The desulfurization agent removes sulfur compound (e.g., methyl melcaptan, dimethyl sulfide, dimethyl disulfide) included in the source gas.

A control portion is configured to execute a determination processing for determining whether a replacement of the desulfurizer (desulfurization agent) is necessary on the basis of a physical quantity regarding water vapor contained in the source gas during an electric power generating operation of the fuel cell system. In those circumstances, a cumulative time during which the source gas having a high dew point level is supplied to the desulfurizer from a reference timing and a cumulative flow, or a cumulative flowing amount (either volume flow or mass flow) of the source gas having the high dew point level from the reference timing may be considered. The reference timing generally corresponds to a timing when the fuel cell system is installed, a timing for start computing the cumulative flow (cumulative flowing amount) of the source gas flowing in the source gas passage, or a timing which is estimated to be substantially a timing for start computing. A timing when the fuel cell system including the new (including substantially new) desulfurizer is newly installed, a timing for start flowing the source gas to the new (including substantially new) desulfurizer, or a timing for replacing (or a timing for regenerating) the desulfurizer or the desulfurization agent in a case where the desulfurizer or the desulfurization agent is replaced (including the regeneration) are disclosed as examples.

Further, there is a possibility that the water enters the gas piping because of the deterioration (aging degradation) of the gas piping or because of the plumbing. Still further, the ingress of the water from melting snow in the spring or rainwater in the rainy season to the piping via the ground may occur. The ingress of the water varies the dew point and the water vapor content contained in the source gas. In those circumstances, however, an increase in the water vapor content contained in the source gas because of the plumbing and the seasonal change does not continue perpetually, and is rather temporal. Thus, the water vapor content contained in the source gas returns to the original level, that is, to be lowered in many cases. It is preferable to restrain an erroneous determination (fault determination) for replacing the desulfurizer, or the desulfurization agent based on the erroneous determination caused by a temporal ingress of the water in a case where the desulfurizer, or the desulfurization agent still have adequate desulfurization capacity.

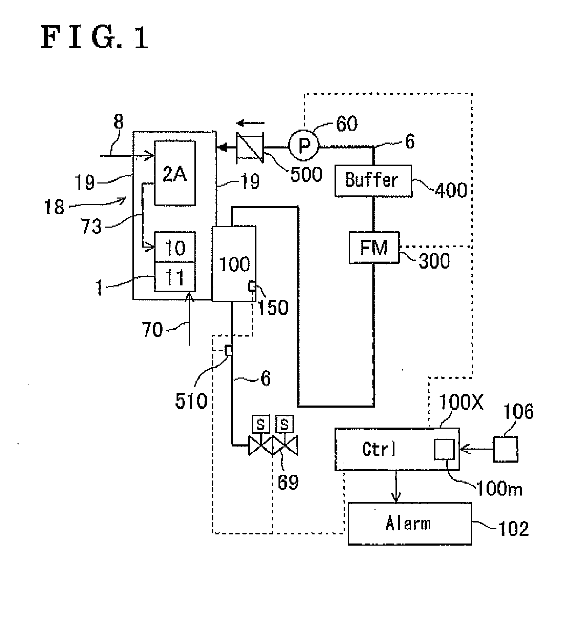

A first embodiment will be explained with reference to Figs. 1 to 4. As shown in Fig. 1, the fuel cell system includes a fuel cell 1 including an anode 10 and a cathode 11, a cathode gas passage 70 for supplying a cathode gas (i.e., a gas including oxygen, for example, from air) to the cathode 11 of the fuel cell 1, a reformer 2A generating an anode gas (i.e., gas including hydrogen or hydrogen gas) by reforming a source gas (source fuel gas), a source gas passage 6 including a pump 60 serving as a gas conveying source for supplying the desulfurized source gas to the reformer 2A, an anode gas passage (anode fluid passage) 73 for supplying the anode gas generated at the reformer 2A to the anode 10 of the fuel cell 1, and a thermal insulation wall 19 which houses the anode gas passage 73, the reformer 2A, and the fuel cell 1. An electric power generating module 18 includes the reformer 2A, the fuel cell 1, and the thermal insulation wall 19. A water supply passage 8 for supplying the water or the water vapor for reforming is connected to the reformer 2A. The reformer 2A includes an evaporating portion for generating the water vapor and a reforming portion for reforming the fuel using the water vapor.

As shown in Fig. 1, a shut-off valve 69, a desulfurizer 100 containing the desulfurization agent, a flow meter 300 measuring the flowing amount (flow rate) of the source gas flowing through the desulfurizer 100 are provided in series at the source gas passage 6 from upstream to downstream in the mentioned order. The desulfurizer 100 is positioned in the relatively high temperature environment (e.g., temperature environment which is equal to or higher than 50°C and equal to or lower than 220°C). Particularly, the desulfurizer 100 is positioned either in contact with an external wall surface of the thermal insulation wall 19 or close to (adjoining) the external wall surface of the thermal insulation wall 19 so that the desulfurizer 100 receives heat (either direct heat transfer or receiving radiation heat) from the thermal insulation wall 19 of the electric power generating module 18. A means for heating the desulfurizer 100 is not limited to the direct heat transfer or receiving radiation heat from the electric power generating module 18. For example, alternatively, an exhaust gas having high temperature that is exhausted from the reformer 2A and the fuel cell 1 may heat the desulfurizer 100. Further, alternatively, the temperature TH1 at the desulfurizer 100 may be maintained by the warm water reserved in a tank, and by a heat generating parts in the fuel cell system (e.g., power conditioner). The desulfurizer 100 contains the desulfurization agent having a desulfurization capacity to the source gas with relatively high dew point (i.e., the desulfurization agent which is capable of desulfurizing the source gas with relatively high dew point level). For example, zeolite is applied as the desulfurization agent. Alternatively, porous material, for example, activated carbon and zeolite supporting metal, for example, silver or copper, may be applied as the desulfurization agent. A thermal sensor 150 detecting the temperature of the desulfurization agent is provided at the desulfurizer 100.

Generally, the source gas (e.g., town gas (13A)) has a low dew point (e.g., equal to or lower than 0°C, equal to or lower than -10°C, equal to or lower than -20°C), and the volume of the water vapor included in the source gas is minute. However, due to plumbing for piping or deterioration of the gas piping due to aging or construction work, the water vapor included in the source gas may increase and there is a possibility that the source gas having high dew point (e.g., equal to or higher than +20°C dew point) is temporarily supplied. In those circumstances, the deterioration of the desulfurization agent may be accelerated, thus the sulfur compound included in the source gas as the odorant may flow into the reformer 2A to decline the durability of the reformer 2A, for example. The desulfurizer 100 which is for high temperature environment (installed at high temperature environment) has (exhibits) favorable desulfurization capacity (desulfurization performance) to the source gas having a relatively high dew point. Thus, even when the source gas with high dew point is supplied, a favorable desulfurization effects, or performance can be attained.

As shown in Fig. 1, the source gas passage 6 is provided with a buffer 400 having a buffer chamber. Thus, the shut-off valve 69, a dew point meter (i.e., serving as a water vapor sensor) 510, the desulfurizer 100, the flow meter 300, the buffer 400, and the pump 60 serving as the gas conveying source are provided in series at the source gas passage 6 from the upstream to the downstream in the mentioned order. The buffer 400 includes the buffer chamber corresponding to a hollow chamber. The pump 60 is configured to convey the source gas towards the reformer 2A of the electric power generating module 18 at the source gas passage 6, which possibly generates the pulsation of the pressure of the source gas. As a countermeasure, the desulfurizer 100, the flow meter 300, the buffer 400, and the pump 60 are provided in series at the source gas passage 6 in the mentioned order. In those circumstances, as shown in Fig. 1, the buffer 400 is positioned at a downstream of the flow meter 300 and at an upstream of the pump 60. That is, the buffer 400 is provided between the pump 60 which serves as a cause of the pulsation and the flow meter 300 which needs to avoid to be affected by the pulsation. According to the foregoing construction, the flow meter 300 is unlikely affected by the pulsation of the pump 60. This is advantageous for stable operation of the system. According to the foregoing construction, flow pulsation of the flow meter 300 can be restrained. Thus, an output value of the flow meter 300 is stabilized, the stability in terms of the control is ensured, and a behavior that the output value of the flow meter 300 is deviated from a true value due to the pulsation can be restrained. A check valve 500 possibly generates the pulsation of the source gas when operated. As a countermeasure, as shown in Fig. 1, because the buffer 400 is positioned between the flow meter 300 and the check valve 500 (pump 60), the flow meter 300 is unlikely affected by the pulsation caused by the pump 60 and the check valve 500. Thus, a precision for measuring the flowing amount (flow rate) of the source gas by the flow meter 300 is ensured, which is advantageous for stable operation of the system. In those circumstances, the order of the arrangements of parts is not limited to the above-described arrangements.

The desulfurizer 100 is positioned in contact with the external surface of the thermal insulation wall 19 of the electric power generating module 18 or close to the external surface of the thermal insulation wall 19 so as to receive the heat from the thermal insulation wall 19, and is maintained within a predetermined temperature range (e.g., 40°C to 220°C or 40°C to 150°C). When a cumulative operation time for an electric power generating operation of the system is assumed to be longer, or when the cumulative flowing amount of the source gas flowing through the source gas passage 6 increases, the desulfurizer 100 gradually deteriorates. Further, in a case where the dew point of the source gas is high, the remaining lifetime of the desulfurizer 100 is assumed to be short because the volume of the water vapor (water vapor content) and the water included in the source gas is large. When the desulfurizer 100 or the desulfurization agent contained in the desulfurizer 100 is replaced, a reset switch (i.e., serving as a reset element) 106 is turned on, and a signal of the reset switch 106 is inputted to a control portion (i.e., also referred to as Ctrl) 100X.

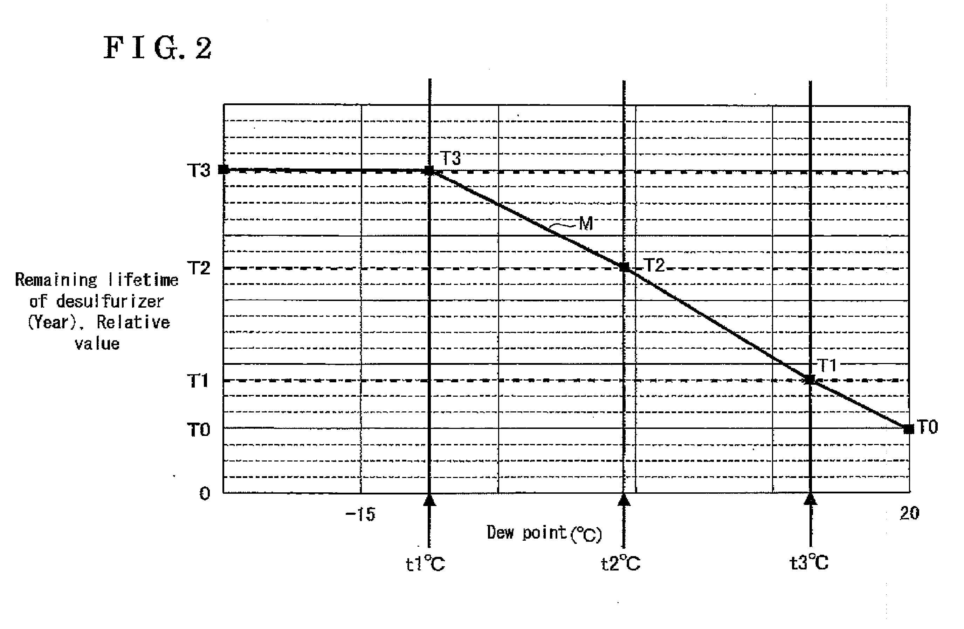

Referring to Fig. 2, timings for replacing the desulfurization agent will be explained hereinafter. Fig. 2 shows the remaining lifetime characteristics of the source gas relative to the dew point. A horizontal axis In Fig. 2 indicates the dew point of the source gas (information value related to the humidity of the source gas) which flows to the desulfurization agent. A vertical axis indicates the remaining lifetime of the desulfurization agent. As indicated with a characteristic line M in Fig. 2, the higher the dew point is, the more the remaining lifetime of the desulfurization agent declines. This is because adsorption sites of the odorant is reduced because H₂O (water vapor) is adsorbed to the adsorption site (desorption site) of the odorant of the desulfurization agent. It is considered that the adsorption of the water vapor is determined by the adsorption equilibrium, and when the dew point of the source gas declines, the remaining lifetime of the desulfurization agent returns to the approximately original remaining lifetime in a normal state. For example, as indicated with the characteristic line M, when the source gas having the dew point of normally 20°0 flows into the desulfurization agent, the remaining lifetime of the desulfurization agent is T0 years. However, even if the source gas having the dew point of 20°C enters at the beginning of use of the system, the remaining lifetime of T3 years is attained when the dew point returns to -20°C thereafter. T0 year, T1 year, T2 year, T3 year indicate relative value of time, and is stored in an area of a memory 100m of the control portion 100X.

When the cumulative operation time exceeds the remaining lifetime on a map shown in Fig. 2, that is, in a case where a point obtained based on a level of the dew point at the timing and a relative elapsed year relative to the remaining lifetime at the timing exceeds the remaining lifetime shown in Fig. 2 (i.e., a point obtained based on a level of the dew point at the timing and a relative elapsed year relative to the remaining lifetime at the timing falls outside a range of the remaining lifetime), the control portion 100X determines that there is a possibility that the sulfer flows out to the downstream of the desulfurizer 100, and stops the operation of the fuel cell system. For example, in a case where a dew point which is equal to or greater than 20°C is detected when the cumulative operation time is equal to or longer than T0, the control portion 100X determines that the lifetime of the desulfurizer 100 has elapsed (is exceeded), and stops the operation of the fuel cell system.

According to the embodiment, the control portion 100X executes the determination processing during the electric power generating operation of the fuel cell system, and determines whether a replacement of the desulfurizer 100, or the desulfurization agent is necessary. In the meantime, the control portion 100X does not execute the determination processing when the temperature TH1 at the desulfurizer 140 is lower than a first predetermined temperature Tx in order to avoid an erroneous replacement (fault replacement) of the desulfurizer, or the desulfurization agent by the determination error as much as possible. Accordingly, an unnecessary increase in maintenance costs can be restrained.

As described above, when the temperature TH1 at the desulfurizer 100 is lower than the first predetermined temperature Tx, it is considered that the sufficient desulfurization capacity of the desulfurizer 100 can be attained. The first predetermined temperature Tx is defined as a value within a range, for example, equal to or lower than 50°C (e.g., room temperature). More particularly, the first predetermined temperature Tx may be defined as a value within a range, for example, equal to or lower than 40°C. In those circumstances, irrespective of whether the source gas is flowing in the source gas passage 6, and/or irrespective of whether the fuel cell system is in operation, because the temperature TH1 at the desulfurizer 100 is lower than the first predetermined temperature Tx, which is at a low temperature, the desulfurization agent contained in the desulfurizer 100 has high capacity (exhibits high performance) for adsorbing sulfur component and H₂O. Thus, even if the source gas with high dew point level is supplied to the desulfurizer 100, the outflow of the sulfur component from the desulfurization agent to the downstream is restrained so as not to affect the reformer 2A and the fuel cell 1. In order to avoid an erroneous replacement of the desulfurizer, or the desulfurization agent due to the determination error at the determination processing as much as possible, the control portion 100X does not execute the determination processing when the temperature TH1 at the desulfurizer 100 is lower than the first predetermined temperature Tx, which is at low temperature.

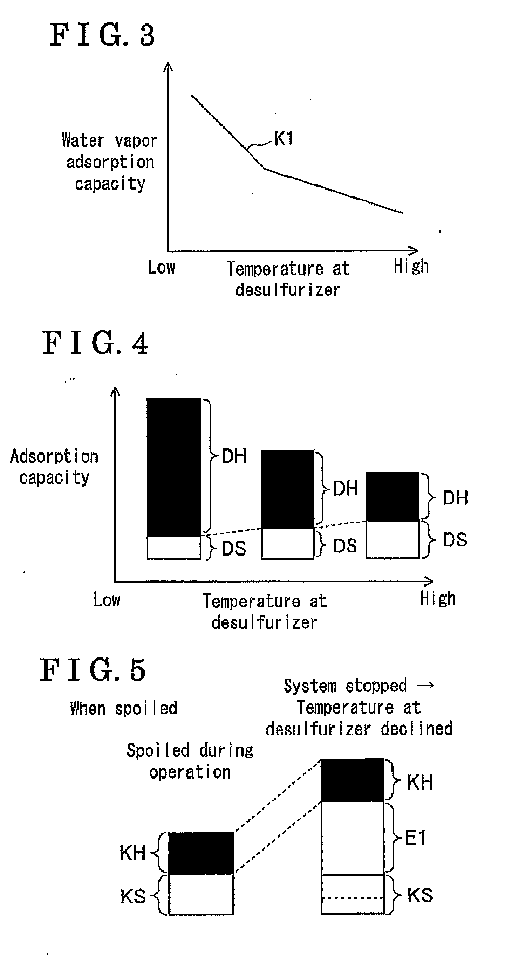

A characteristic line K1 in Fig. 3 shows a relationship between the temperature TH1 at the desulfurizer 100 and water vapor adsorption capacity of the desulfurizer 100. The characteristic line K1 in Fig. 3 shows a relationship between the temperature TH1 at the desulfurizer 100 and the sulfur adsorption capacity in a state where there is no water vapor. As shown in Fig. 3, as the temperature TH1 at the desulfurizer 100 declines, the adsorption capacity (adsorption performance) of the water vapor (water vapor adsorption capacity) at the desulfurizer 100 increases (is enhanced). In a state where there is no water vapor, as the temperature TH1 at the desulfurizer 100 declines, the adsorption capacity (adsorption performance) of sulfur (sulfur adsorption capacity) at the desulfurizer 100 increases (is enhanced).

Fig. 4 shows a relationship between the temperature (TH1) at the desulfurizer 100 and the adsorption capacity (adsorption performance) of the desulfurizer 100 at a high dew point level (e.g., 20°C dew point). DH indicates the adsorption capacity for the water vapor (water vapor adsorption capacity). DS indicates the adsorption capacity for sulfur (sulfur adsorption capacity). In Fig. 4, (DH+DS) shows the capacity for adsorbing the sulfur in a state where the water vapor does not exist. Similar to the result shown in Fig. 3, referring to Fig. 4, the lower the temperature TH1 at the desulfurizer 100 is, a level of (DH+DS) increases, that is, a level of the capacity for adsorbing the sulfur in a state where the water vapor does not exist is enhanced. In those circumstances, however, the water vapor is adsorbed to the desulfurization agent contained in the desulfurizer 100 prior to the sulfur component. Thus, based on the characteristics shown in Fig. 3, the lower the temperature TH1 at the desulfurizer 100 is assumed to be, the water vapor adsorption capacity DH increases. In consequence, the lower the temperature TH1 at the desulfurizer 100 is, the more a total capacity to adsorb the sulfur (i.e., (DH+DS)) in a state where the water vapor is not included increases, however, the sulfur adsorption capacity DS per se is reduced because of the low temperature. That is, when the dew point of the source gas Is at a high level, the higher the temperature TH1 at the desulfurizer 100 is, the higher the desulfurization capacity of the desulfurizer 100 is assumed to be. Further, when the dew point of the source gas is at a high level, the lower the temperature TH1 at the desulfurizer 100 is, the lower the desulfurization capacity of the desulfurizer 100 is assumed to be.

Fig. 5 shows a case where the temperature at the desulfurizer 100 is lowered by stopping the operation of the fuel cell system after the desulfurizer 100 is spoiled, or the desulfurization capacity of the desulfurization agent is impaired during the electric power generating operation of the fuel cell system. Leftward blocks in Fig. 5 shows a case where the desulfurizer 100 is spoiled, or the desulfurization capacity of the desulfurization agent is impaired during the operation of the fuel cell system. Rightward blocks in Fig. 5 shows a case where the temperature at the desulfurizer 100 is lowered by stopping the operation of the fuel cell system after the desulfurizer 100 is spoiled, or the desulfurization capacity of the desulfurization agent is impaired. It is assumed that the water vapor and the sulfur component are adsorbed to the desulfurization agent which turns to be water vapor adsorbed portion KH and sulfur component adsorbed portion KS, respectively. By stopping the operation of the fuel cell system, the temperature at the desulfurizer 100 declines. Thus, as shown in rightward blocks in Fig. 5, in accordance with the decrease of the temperature at the desulfurizer 100, a region E1 which is capable of adsorbing the water vapor or the sulfur component significantly increases at the desulfurization agent. In consequence, when the temperature at the desulfurizer 100 declines by stopping the operation of the fuel cell system, water vapor adsorption capacity and sulfur component adsorption capacity of the desulfurization agent can be significantly increased. In those circumstances, even when the source gas with high dew point is supplied to the desulfurizer 100, the water vapor can be adsorbed to the region E1 which is capable of adsorbing the water vapor or the sulfur component during a process in which the temperature at the desulfurizer 100 increases again and states of the desulfurizer 100 transits from a state shown in rightward blocks in Fig. 5 to a state shown in leftward blocks in Fig. 5. Thus, water vapor can be favorably adsorbed to the desulfurization agent until the region E1 which is capable of adsorbing the water vapor or the sulfur component is turned to be the water vapor adsorbed portion KH. In those circumstances, the sulfur component which has already adsorbed to the desulfurization agent is prevented from being desorbed from the desulfurization agent.

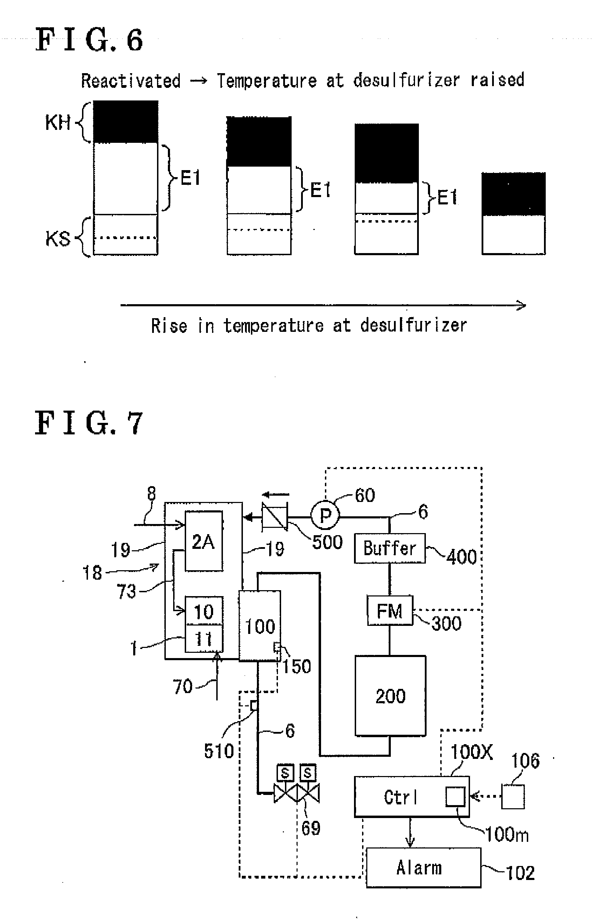

Fig. 6 shows a case where the operation of the fuel cell system is stopped because the desulfurizer 100 is spoiled, or the desulfurization capacity of the desulfurization agent is impaired due to a continuation of the high dew point level of the source gas, and where the fuel cell is reactivated to be transited to a warm-up mode and then to an electric power generating mode again. In a case where the fuel cell system is reactivated after stopping the operation thereof, as shown in leftmost blocks in Fig. 6, as the temperature at the desulfurizer 100 is declined, the region E1 which is capable of adsorbing the water vapor or the sulfur component at the desulfurization agent can be significantly increased. That is, because the desulfurizer 100 is at a low temperature when the fuel cell system is reactivated, water vapor adsorption capacity and sulfur component adsorption capacity at the desulfurization agent increase as the region E1 which is capable of adsorbing the water vapor or the sulfur component. Thus, even if the source gas with high dew point level is supplied to the desulfurization agent, the water vapor of the source gas with high dew point can be adsorbed to the desulfurization agent, and the sulfur component can be adsorbed to the desulfurizer, which restrains the outflow of the sulfur component to the downstream of the desulfurizer 100. In those circumstances, as an operation time for the electric power generating operation elapses, the temperature at the desulfurizer 100 gradually increases. Further, as the operation time for the electric power generating operation elapses and as the gas having high dew point is supplied, the water vapor contained in the gas with high dew point is adsorbed to the desulfurization agent to establish adsorption equilibrium, volumes of the water vapor adsorbed portion KH, the sulfur component adsorbed portion KS, and the region E1 which is capable of adsorbing the water vapor or the sulfur component change as illustrated in Fig. 6 from the left to the right in Fig. 6. As a result, the region E1 which is capable of adsorbing the water vapor or the sulfur component gradually decreases. It is necessary to execute the determination processing in those cases. When the dew point of the source gas returns from the high dew point level to the low dew point level, the desorption of the water vapor from the water vapor adsorption portion (water vapor adsorbed portion KH) at the desulfurization agent is accelerated, thus the capacity for adsorbing the sulfur at the desulfurization agent is restored.

A second embodiment of the fuel call system will be explained as follows referring to Figs. 1 to 4. Basically similar construction to the first embodiment is applied to the second embodiment, and effects similar to the first embodiment are attained. According to the second embodiment, the control portion 100X executes the determination processing during the electric power generating operation of the fuel cell system to determine whether a replacement of the desulfurizer 100, or the desulfurization agent is necessary. However, when the temperature TH1 at the desulfurizer 100 is lower than the first predetermined temperature Tx, the control portion 100X does not execute the determination processing. In accordance with a material of the desulfurizer and composition of gas, the first predetermined temperature Tx is set within a range, for example, equal to or lower than 50°C.

Further, according to the second embodiment, the control portion 100X does not execute the determination processing at at least one of the following cases (i) at a warming-up mode of the fuel cell system, and (ii) when the source gas does not flow in the source gas passage 6. In cases as indicated in items (i) and (ii), it is considered that the temperature TH1 at the desulfurizer 100 is low (generally, less than the first predetermined temperature Tx), and as understood from explanations regarding Figs. 3 and 4, the capacity of the desulfurization agent contained in the desulfurizer 100 for adsorbing the sulfur component and H₂O is large. Accordingly, even if the source gas with high dew point level is supplied to the desulfurizer 100, the outflow of the sulfur component from the desulfurization agent to the downstream can be restrained, which prevents the reformer 2A and the fuel cell 1 which are positioned at the downstream of the desulfurizer 100 from being affected by the sulfur. Thus, in order to avoid erroneous replacement of the desulfurizer by the determination error at the determination processing as much as possible, the control portion 100X does not execute the determination processing when the temperature TH1 at the desulfurizer 100 is lower than the first predetermined temperature Tx, which is defined as the low temperature.

(i) At a warm-up mode at which the fuel cell system raises temperature of the reformer 2A and the fuel cell 1 to a level of the temperature for the electric power generating operation although the electric power generating operation is not performed: In those circumstances, because the temperature TH1 at the desulfurizer 100 is low, it is considered that the desulfurization capacity of the desulfurizer 100 can be adequately attained. At the warm-up mode, irrespective of whether the source gas is flowing in the source gas passage 6, the desulfurization agent contained in the desulfurizer 100 has large capacity for adsorbing the sulfur component and H₂O because the temperature TH1 at the desulfurizer 100 is still low. Accordingly, even if the source gas with high dew point level is supplied to the desulfurizer 100, the outflow of the sulfur component from the desulfurizer 100 to the downstream can be restrained.

(ii) A case where the source gas does not flow in the source gas passage 6: In those circumstances, irrespective of a level of the dew point of the source gas, because the source gas is not flowing in the source gas passage 6 and the desulfurizer 100, it is not necessary to desulfurize the source gas. Modes during which the source gas does not flow in the source gas passage 6, for example, a stand-by mode of the fuel cell system during which the electric power is not generated because the anode gas and the cathode gas are not supplied to the fuel cell, and a case before ignition during a warm-up mode fall within the cases of (ii).

A third embodiment of the fuel cell system will be explained with reference to Fig. 7. The fuel cell system according to the third embodiment includes the construction and effects basically similar to the first embodiment. As shown in Fig. 7, a first desulfurizer 100 is positioned in the environment in relatively high temperature (a first environment) (e.g., temperature environment equal to or higher than 50°C and equal to or lower than 220°C). Particularly, the first desulfurizer 100 is positioned adjoining the external wall surface of the thermal insulation wall 19 in a manner that the first desulfurizer 100 is either in contact with or is close to the external wall surface of the thermal insulation wall 19 so as to receive the heat (either direct heat transfer or receiving radiation heat) from the thermal insulation wall 19 of the electric power generating module 18. The first desulfurizer 100 contains a first desulfurization agent exhibiting (having) a desulfurization performance (desulfurization capacity) for the source gas with relatively high dew point. For example, zeolite may be applied as the first desulfurization agent. Alternatively, porous material, for example, zeolite supporting metal such as silver or copper, or further alternatively, activated carbon may be applied as the first desulfurization agent. A second desulfurizer 200 is positioned at a second environment (e.g., 0°C to 50°C) which is relative low temperature compared to the first environment, and is positioned separately, or away from the electric power generating module 18 which is in the high temperature. A second desulfurization agent contained in the second desulfurizer 200 has (exhibits) desulfurization performance (desulfurization capacity) relative to the source gas having relatively low dew point. The second desulfurizer 200 exhibits (has) lower desulfurization performance (desulfurization capacity) for the source gas with relatively high dew point (i.e., water vapor volume is relatively large) compared to the desulfurization performance (desulfurization capacity) that the second desulfurizer 200 exhibits (has) for the source gas with relatively low dew point (i.e., water vapor volume is relatively small). For example, zeolite is applied as the second desulfurization agent.

According to the third embodiment, the source gas flows in an order from the first desulfurizer 100 which is installed (which is configured to be installed) at high temperature environment to the second desulfurizer 200 which is installed (which is configured to be installed) at low temperature environment. This enables to receive the heat of the source gas which passes through the first desulfurizer 100 by the second desulfurizer 200 to radiate the heat at the second desulfurizer 200. Thus, the temperature of the source gas which flows into the flow meter 300 which is susceptible to the influence of the heat can be declined as much as possible. In those circumstances, a problem of the thermal resistance of the flow meter 300 can be resolved. Accordingly, even if the heat retention capacity of the source gas which passes through the first desulfurizer 100 is high, the temperature of the source gas can be lowered sufficiently by the heat radiation at the second desulfurizer 200.

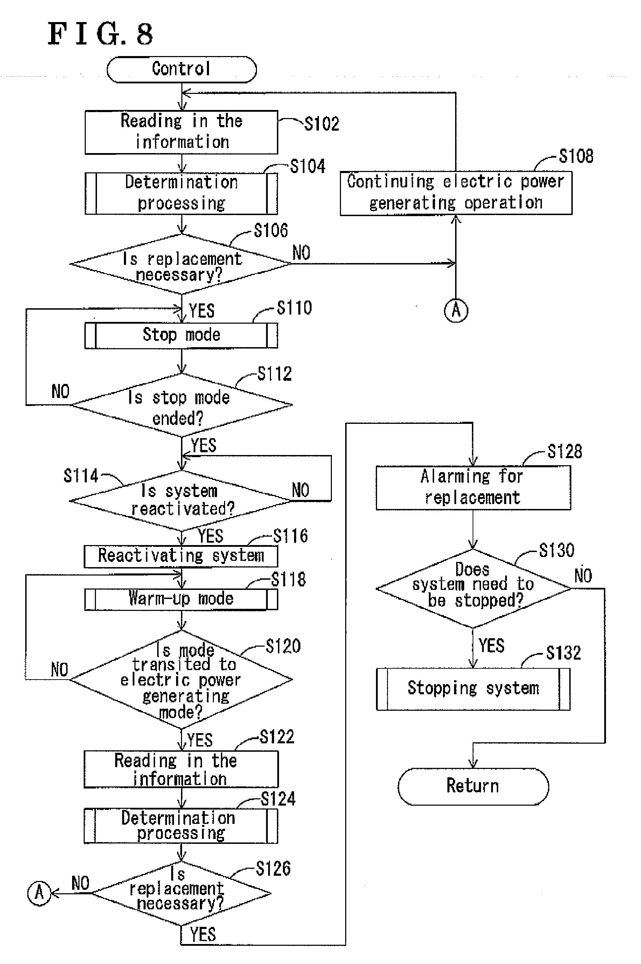

A fourth embodiment will be explained with reference to Figs. 1 to 4, and 8. The fuel cell system according to the fourth embodiment includes the construction and effects basically similar to the first and second embodiments. According to the fourth embodiment, when the determination for replacing the desulfurizer 100, or the desulfurization agent is outputted during the determination processing, the control portion 100X stops the electric power generating operation of the fuel cell system on the basis of the determination result, and when reactivating the fuel cell system after the temporal stop of the operation of the fuel cell system, the control portion 100X does not execute the determination processing at a warm-up mode during the reactivation and further during a transition from the warm-up mode to an electric power generating mode, After the modes are transited from the warm-up mode to the electric power generating mode, the control portion 100X re-executes the determination processing to determine whether the replacement of the desulfurizer 100 or the desulfurization agent is necessary.

According to the fourth embodiment, first, the control portion 100X reads in the information, for example, a dew point level of the source gas, a cumulative operation time, and a cumulative flow (cumulative flowing amount) of the source gas from the reference timing to the present from the memory 100m (Step S102). Then, the control portion 100X executes the determination processing to determine whether the replacement of the desulfurizer 100, or the desulfurization agent is necessary (Step S104). Even if it is determined that the replacement of the desulfurizer 100 is necessary, at the moment, messages or alarms for urging immediate replacement of the desulfurizer 100, or desulfurization agent is not outputted to a user. This is for avoiding an erroneous replacement of the desulfurizer 100, or the desulfurization agent by the determination error caused by a temporal increase in dew point (being high dew point) of the source gas, and by a temporal backflow of the water vapor from the reformer 2A. As a result of the determination, in a case where the replacement of the desulfurizer 100, or the desulfurization agent is not necessary (NO at Step S106), a command for continuing the electric power generating operation by the fuel cell system is outputted (Step S108). In a case where the lifetime of the desulfurizer 100, or the desulfurization agent ends, or is about to end and where it is necessary to replace the desulfurizer 100, or the desulfurization agent (YES at Step S106), the fuel cell system transits from the electric power generating mode to a stop mode serving as a stop process (Step S110). This is for avoiding sulfur poisoning on catalysts of the fuel cell 1 and the reformer 2A which are positioned at the downstream of the desulfurizer 100.

At the stop mode, the air serving as a cathode gas is continued to be supplied to the reformer 2A, the electric power generating module 18 is cooled, the source gas is supplied to the reformer 2A while reducing its flow (flowing amount), and the water for reforming is supplied to the reformer 2A while reducing its flow (flowing amount). Accordingly, the water vapor is formed at the reformer 2A, and the source gas is turned to be the hydrogen gas by steam reforming. Unlike the atmosphere, because the hydrogen gas reacts to reduce oxygen, or dioxides, high-temperature oxidation of piping parts, for example, the electric power generating module 18, can be restrained. In order to avoid the high-temperature oxidation, when the temperature of the electric power generating module 18 is assumed to be a low level, the shut-off valve 69 is closed to stop the supply of the source gas, the supply of the water for reforming is stopped, and the generation of the hydrogen gas reacting to reduce oxygen, or dioxide is stopped. In those circumstances, the air serving as the cathode gas is continued to be supplied to the reformer 2A to further cool the electric power generating module 18. At the stop mode as explained above, the desulfurizer 100 does not execute the determination processing for determining whether the replacement of the desulfurizer 100, or the desulfurization agent is necessary. This is because the temperature TH1 at the desulfurizer 100 is low and the adsorption capacity of the desulfurization agent for adsorbing the water vapor and the sulfur component is high, provided that the source with high dew point level is supplied, the outflow of the sulfur to the downstream can be restrained. Thus, the sulfur poisoning on the fuel cell 1 and the reformer 2A provided at the downstream of the desulfurizer 100 can be avoided. Because the determination processing is not conducted, an erroneous determination at the stop mode can be restrained. In those circumstances when the temperature at the desulfurizer 100 is assumed to be equal to or lower than a certain level, the operation of the fuel cell system is temporarily stopped.

When the temperature at the electric power generating module 18 is assumed to be lower than the first predetermined temperature, the stop mode ends. When the stop mode is ended at the determination to determine whether the stop mode is ended (YES at Step S112), it is determined whether the fuel cell system is to be reactivated (Step S114). The fuel cell system is not reactivated when a reactivation command is not outputted by either the control portion 100X or the user. When the reactivation command is outputted by either the control portion 100X or the user (YES at Step S114), the fuel cell system is reactivated (Step S116). When the fuel cell is reactivated, the fuel cell system is assumed to be in the warm-up mode, the source gas supplied to the electric power generating module 18 is combusted by the air supplied via the cathode gas passage 70, and the temperature at the reformer 2A and the fuel cell 1 of the electric power generating module 18 is increased to be a level appropriate for a reforming reaction at the reformer 2A and the fuel cell 1.

At the warm-up mode, because the temperature TH1 at the desulfurizer 100 is lower than the first predetermined temperature, the determination processing for determining whether the replacement of the desulfurizer 100, or the desulfurization agent is necessary is not executed. At the warm-up mode, because the temperature TH1 at the desulfurizer 100 is low, the adsorption capacity of the desulfurization agent for adsorbing the water vapor and the sulfur component is high. In those circumstances, provided that the source gas with the high dew point is supplied, the outflow of the sulfur component to the downstream is restrained, and the sulfur poisoning on the fuel cell 1 and the reformer 2A provided at the downstream of the desulfurizer 100 can be avolded.

Further, at Step S120, whether the modes of the fuel cell system are transited from the warm-up mode to the electric power generating mode is determined. In a case where the mode is transited to the electric power generating mode (YES at Step S120), the execution of the determination processing is necessary because the temperature TH1 at the desulfurizer 100 is increased. In response to this, the control portion 100X reads in the information regarding the dew point level of the source gas and the cumulative time (or cumulative flowing amount of the source gas) from the reference timing to the present from the memory 100m (Step S122), and executes the determination processing to determine whether the replacement of the desulfurizer 100, or the desulfurization agent is necessary (Step S124). As a result of the determination, in a case where the replacement of the desulfurizer 100, or the desulfurization agent is not necessary (NO at Step S126), the control portion 100X outputs a command for continuing the electric power generating operation of the fuel cell system (Step S108). In a case where the lifetime of the desulfurizer 100, or the desulfurization agent ends, or is about to end and where it is necessary to replace the desulfurizer 100, or the desulfurization agent (YES at Step S126), an alert commanding the replacement of the desulfurizer 100, or the desulfurization agent is outputted to an alarm 102 which aurally or visually alarms a user or a person in charge of maintenance (Step S128). Further, whether the fuel cell system needs to be stopped is determined (Step S130), and further, in a case where the lifetime of the desulfurizer 100, or the desulfurization agent ends, or is about to end and where it is necessary to stop the operation of the fuel cell system (YES at Step S130), the operation of the fuel cell system is stopped by the stop mode or an emergent stop mode (Step S132). In those circumstances, unless the desulfurizer 100, or the desulfurization agent is replaced (including replacement, regeneration, repair, or reconditioning), it is preferable to prohibit the reactivation of the fuel cell system. In the meantime, because the hydrogen gas reacting to reduce oxygen is generated at the stop mode, the source gas and the water for reforming is continued to be supplied for a while. The supply of the source gas is immediately stopped at the emergent stop mode.

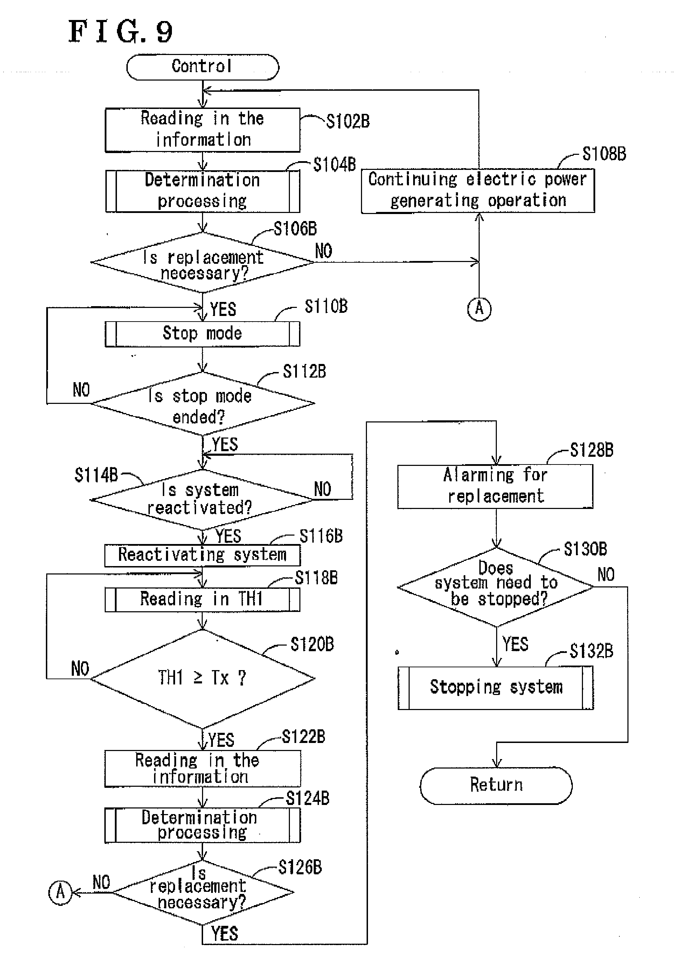

A fifth embodiment will be explained with reference to Figs. 1 to 4, and 9. The fuel cell system according to the fifth embodiment includes the construction and effects basically similar to the first and second embodiments. According to the fifth embodiment, when it is determined that the desulfurizer 100, or the desulfurization agent needs to be replaced at the determination processing, the electric power generating operation of the fuel cell system is stopped on the basis of the determination, and the fuel cell system is reactivated after the electric power generating operation of the fuel cell system is stopped. In those circumstances, the control portion 100X does not execute the determination processing when the temperature TH1 at the desulfurizer 100 is lower than the first predetermined temperature Tx, and the control portion 100X re-executes the determination processing when the temperature TH1 at the desulfurizer 100 is equal to or higher than the first predetermined temperature Tx.

First, the control portion 100X reads in the information, for example, a dew point level of the source gas and a cumulative operation time from the reference timing to the present from the memory 100m (Step S102B). Then, the control portion 100X executes the determination processing to determine whether the replacement of the desulfurizer 100, or the desulfurization agent is necessary (Step S104B). Even if it is determined that the replacement of the desulfurizer 100, or the desulfurization is necessary, at the moment, messages or alarms for urging immediate replacement of the desulfurizer 100, or desulfurization agent is not outputted to the user. This is for avoiding an erroneous replacement of the desulfurizer 100, or the desulfurization agent by the determination error caused by a temporal increase in dew point (being high dew point) of the source gas, and by a temporal backflow of the water vapor from the reformer 2A. As a result of the determination, in a case where the replacement of the desulfurizer 100, or the desulfurization agent is not necessary (NO at Step S106B), a command for continuing the electric power generating operation by the fuel cell system is outputted (Step S108B). In a case where the lifetime of the desulfurizer 100, or the desulfurization agent ends, or is about to end and where it is necessary to replace the desulfurizer 100, or the desulfurization agent (YES at Step S106B), the fuel cell system transits from the electric power generating mode to the stop mode (Step S110B).

The stop mode is performed as described above. At the stop mode, because the temperature TH1 at the desulfurizer 100 is lower than the first predetermined temperature Tx, the determination processing for determining whether the replacement of the desulfurizer 100, or the desulfurization agent is necessary is not executed. This is for avoiding an erroneous replacement of the desulfurizer 100, or the desulfurization agent by the determination error caused by a temporal increase in dew point (being high dew point) of the source gas, and by a temporal backflow of the water vapor from the reformer 2A. Further, at the stop mode, because the temperature TH1 at the desulfurizer 100 is low and the adsorption capacity of the desulfurization agent for adsorbing the water vapor and the sulfur component is high, provided that the source gas with the high dew point is supplied, the outflow of the sulfur component to the downstream is restrained, and the sulfur poisoning on the fuel cell 1 and the reformer 2A provided at the downstream of the desulfurizer 100 can be avoided.

When the electric power generating module 18 is assumed to be low temperature, the stop mode ends. Upon the determination that the stop mode is ended (YES at Step S112B), the control portion 100X determines whether to reactivate the fuel cell system (Step S114B). The fuel cell system is reactivated (Step S116B) when the reactivation command is outputted from the control portion 100X or by the user (YES at Step S114B). The temperature at the electric power generating module 18 increases by the reactivation, thus the temperature at the desulfurizer 100 gradually increases. At Step S118B, the temperature TH1 at the desulfurizer 100 is read in. When the temperature TH1 at the desulfurizer 100 is lower than the first predetermined temperature Tx (NO at Step S120B), the determination processing whether the replacement of the desulfurizer 100 is necessary is not executed. This is because there is a possibility for erroneously replacing the desulfurizer 100, or the desulfurization agent by the determination error. Further, because the temperature TH1 at the desulfurizer 100 is low and because the adsorption capacity of the desulfurization agent for adsorbing the water vapor and the sulfur component is high, even if the source gas with high dew point is supplied, the outflow of the sulfur component to the downstream is restrained to avoid the poisoning on the fuel cell 1 and the reformer 2A provided at the downstream of the desulfurizer 100. Thus, because whether to execute the determination processing for determining whether the replacement of the desulfurizer 100 or the desulfurization agent is necessary is determined directly based on the temperature TH1 at the desulfurizer 100, a precision for the determination can be enhanced.

Further, it is determined whether the temperature TH1 at the desulfurizer 100 is equal to or higher than the first predetermined temperature Tx (Step S120B). When the temperature TH1 at the desulfurizer 100 is equal to or higher than the first predetermined temperature Tx (YES at Step 120B), the control portion 100X needs to perform the determination processing. In response to this, the control portion 100X reads in the information regarding the dew point level of the source gas and the cumulative time from the reference timing to the present from the memory 100m (Step S122B), and re-executes the determination processing to determine whether the replacement of the desulfurizer 100, or the desulfurization agent is necessary (Step S124B). As a result of the determination, in a case where the replacement of the desulfurizer 100, or the desulfurization agent is not necessary (NO at Step S126B), the control portion 100X outputs a command for continuing the electric power generating operation of the fuel cell system (Step S108B). In a case where it is necessary to replace the desulfurizer 100, or the desulfurization agent (YES at Step S126B), an alert commanding the replacement of the desulfurizer 100, or the desulfurization agent is outputted to an alarm 102 which aurally or visually alarms the user (Step S128B). Further, whether the fuel cell system needs to be stopped is determined (Step S130B), and further, in a case where deterioration level of the desulfurizer 100, or the desulfurization agent is high, it is determined that the operation of the fuel cell system needs to be stopped (YES at Step S130B), and the operation of the fuel cell system is re-stopped by the stop mode or the emergent stop mode (Step S132B). In those circumstances, unless the desulfurizer 100, or the desulfurization agent is replaced (including replacement, regeneration, repair, or reconditioning), it is preferable to prohibit the reactivation of the fuel cell system.

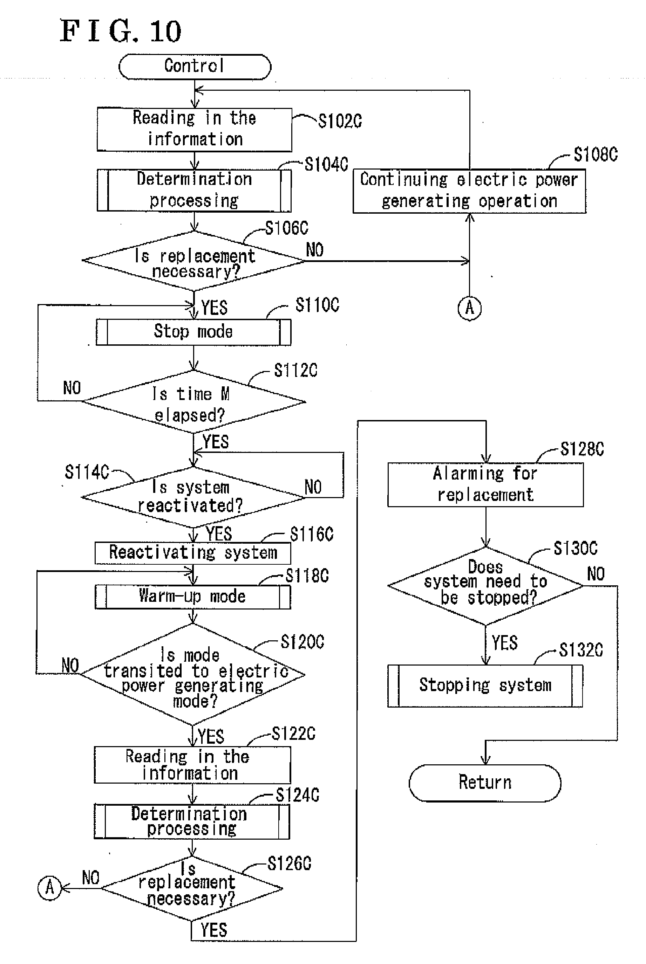

A sixth embodiment will be explained with reference to Figs. 1 to 4, and 10. The fuel cell system according to the sixth embodiment includes the construction and effects basically similar to the first and second embodiments. According to the sixth embodiment, in a case where the control portion 100X outputs the determination to urge the replacement of the desulfurizer 100, or the desulfurization agent at the determination processing, the electric power generating operation of the fuel cell system is stopped, and it is estimated that the temporal increase in dew point (being high dew point) of the source gas caused by, for example, plumbing or plumbing for maintenance has not ended in a case where the timing is within a predetermined time M from the time when a command for stopping the electric power generating operation of the fuel cell system is outputted. In this case, even If the reactivation command is outputted from the user, the fuel cell system is not reactivated, and the determination processing is not executed. By setting the predetermined time M to be longer than a time necessary for completing the stop mode, according to the sixth embodiment, the prevention of the erroneous replacement of the desulfurizer 100, or the desulfurization agent at a temporal increase in dew point during which the dew point is assumed to be high can be performed more strictly compared to the fourth and fifth embodiments. In those circumstances, after an elapse of the predetermined time M from the timing when the command for stopping the electric power generating operation of the fuel cell system is outputted, once the reactivation command is outputted by the user, the fuel cell system is reactivated, and the determination processing is re-executed.

First, the control portion 100X reads in the information, for example, a dew point level of the source gas and a cumulative operation time from the reference timing to the present from the memory 100m (Step S102C), Then, the control portion 100X executes the determination processing to determine whether the replacement of the desulfurizer 100, or the desulfurization agent is necessary (Step S104C). Even if it is determined that the replacement of the desulfurizer 100 is necessary, at the moment, messages or alarms for urging immediate replacement of the desulfurizer 100, or desulfurization agent is not outputted to the user. This is for avoiding an erroneous replacement of the desulfurizer 100, or the desulfurization agent by the determination error caused by, for example, a temporal increase in dew point (being high dew point) of the source gas, or by a temporal backflow of the water vapor from the reformer 2A. As a result of the determination, in a case where the replacement of the desulfurizer 100, or the desulfurization agent is not necessary (NO at Step S106C), a command for continuing the electric power generating operation by the fuel cell system is outputted (Step S108C). In a case where the lifetime of the desulfurizer 100, or the desulfurization agent ends, or is about to end and where it is necessary to replace the desulfurizer 100, or the desulfurization agent (YES at Step S106C), the fuel cell system transits from the electric power generating mode to the stop mode (Step S110C). The stop mode is performed as described above. At the stop mode, because the temperature TH1 at the desulfurizer 100 is low, the determination processing for determining whether the replacement of the desulfurizer 100, or the desulfurization agent is necessary is not executed. This is because there is a possibility for erroneously replacing the desulfurizer 100, or the desulfurization agent by the determination error. Further, because the temperature TH1 at the desulfurizer 100 is low and because the adsorption capacity of the desulfurization agent for adsorbing the water vapor and the sulfur component is high, even if the source gas with high dew point is supplied, the outflow of the sulfur to the downstream is restrained to avoid the poisoning on the fuel cell 1 and the reformer 2A provided at the downstream of the desulfurizer 100.

The control portion 100X determines whether the predetermined time M has elapsed from the timing that the fuel cell system is transited to the stop mode (Step S112C). In a case where the predetermined time M has not elapsed from the timing the fuel cell system is transited to the stop mode (NO at Step S112C), the control portion 100X does not execute the determination processing. This is because the high dew point of the source gas caused by, for example, the plumbing of the gas piping or the plumbing of the gas piping for the maintenance continues for a while and can be a cause for the erroneous determination that the replacement of the desulfurizer, or the desulfurization agent is necessary, however, the level of the dew point of the source gas returns to the original level (low level) after the completion of the plumbing of the gas piping or the plumbing of the gas piping for the maintenance after an elapse of a certain amount of time. The predetermined time M can be set in accordance with the fuel cell system and the desulfurizer. For example, the predetermined time M can be defined as a length of time within a range, for example, from three hours to four days (ninety-six hours), or from four hours to two days (forty-eight hours).

in a case where the predetermined time M has not elapsed from the timing when the fuel cell is transited to the stop mode (NO at Step S112C), even if the reactivation command is outputted from the control portion 100X or by the user, the fuel cell system is not reactivated, and the control portion 100X does not execute the determination processing. This is because it is possible that an erroneous replacement of the desulfurizer 100, or the desulfurization agent is caused by the determination error affected by the high dew point level of the source gas because the plumbing of the gas piping or the plumbing of the gas piping for the maintenance is not completed. In a case where the predetermined time M has elapsed from the timing when the fuel cell system transits to the stop mode (YES at Step S112C), the control portion 100X determines whether to activate the fuel cell system (Step S114C). In a case where the reactivation command is outputted from the control portion 100X or by the user, the fuel cell system is reactivated (YES at Step S114C, Step S116C). By the reactivation, the warm-up mode is executed to increase the temperature at the electric power generating module 18. In a case where the modes of the fuel cell system is not transited from the warm-up mode to the electric power generating mode (NO at Step S120), because the warm-up mode continues (Step S118C), the control portion 100X does not execute the determination processing for determining whether the replacement of the desulfurizer 100, or the desulfurization agent is necessary. This is because there is a possibility for erroneously replacing the desulfurizer 100, or the desulfurization agent by the determination error. Further, because the temperature TH1 at the desulfurizer 100 is low at the warm-up mode, the control portion 100X does not execute the determination processing for determining whether the replacement of the desulfurizer 100, or the desulfurization agent is necessary. Because the temperature TH1 at the desulfurizer 100 is low and the adsorption capacity of the desulfurization agent for adsorbing the water vapor and the sulfur component is high, even if the source gas with high dew point is supplied, the outflow of the sulfur to the downstream is restrained to avoid the poisoning on the fuel cell 1 and the reformer 2A provided at the downstream of the desulfurizer 100.

In a case where the operation mode of the fuel cell is transited to the electric power generating mode (YES at Step S120C), it is necessary to execute the determination processing. The control portion 100X reads in the information regarding the dew point level of the source gas and the cumulative time from the reference timing to the present from the memory 100m (Step S122C), and re-executes the determination processing to determine whether the replacement of the desulfurizer 100, or the desulfurization agent is necessary (Step S124C). As a result of the re-executed determination, in a case where the replacement of the desulfurizer 100, or the desulfurization agent is not necessary (NO at Step S126C), the control portion 100X outputs a command for continuing the electric power generating operation of the fuel cell system (Step S108C). In a case where it is necessary to replace the desulfurizer 100, or the desulfurization agent (YES at Step S126C), an alert commanding the replacement of the desulfurizer 100, or the desulfurization agent is outputted to the alarm 102 which aurally or visually alarms the user (Step S128C). Further, it is determined whether the fuel cell system needs to be stopped (Step S130C), and further, in a case where the remaining lifetime of the desulfurizer 100, or the desulfurization agent is short and where the operation of the fuel cell system needs to be stopped (YES at Step S130C), the operation of the fuel cell system is re-stopped (Step S132C). In those circumstances, unless the desulfurizer 100, or the desulfurization agent is replaced (including replacement, regeneration, repair, or reconditioning), it is preferable to prohibit the reactivation of the fuel cell system.

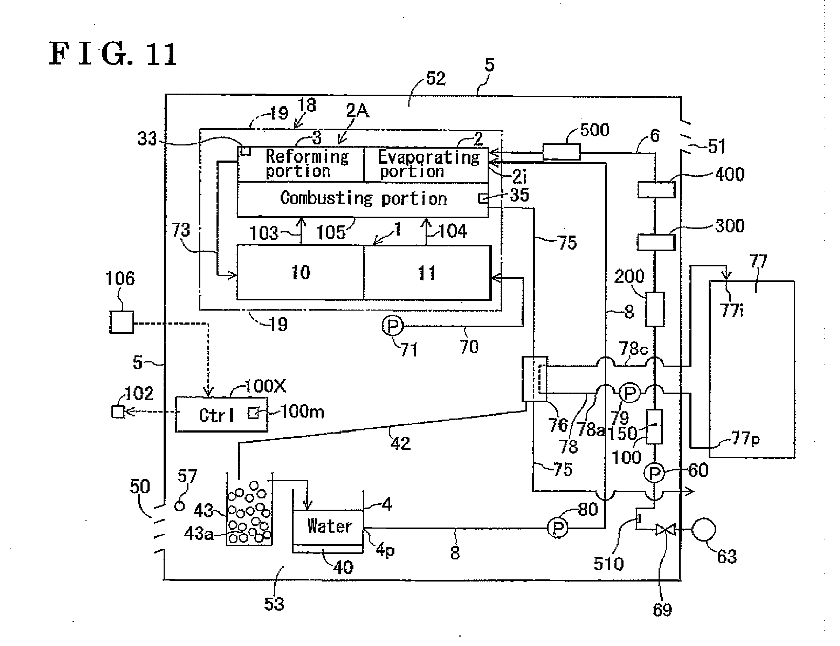

Fig. 11 shows an example of an overview of an application of the fuel cell according to the embodiments. As shown in Fig. 11, the fuel cell system includes the fuel cell 1, an evaporating portion 2 for generating water vapor by evaporating the liquid-phase water, a reforming portion 3 for forming anode gas by reforming a fuel (source gas, source fuel gas) using the water vapor generated at the evaporating portion 2, a tank 4 for reserving the liquid-phase water which is to be supplied to the evaporating portion 2, and a case 5 for housing the fuel cell 1, the evaporating portion 2, the reforming portion 3, and the tank 4. The fuel cell 1 includes the anode 10 and the cathode 11 which sandwich an ion conductor therebetween. For example, a solid oxide fuel cell (SOFC) which is operated at a temperature, for example, equal to or greater than 400 degrees Celsius, may be applied to the fuel cell 1. The reforming portion 3 is formed by supporting a reforming catalyst onto a carrier, for example, ceramics, and is provided adjoining the evaporating portion 2. The reforming portion 3 and the evaporating portion 2 structure the reformer 2A, and are enclosed by the thermal insulation wall 19 together with the fuel cell 1 to form the electric power generating module 18. The reforming portion 3, the evaporating portion 2, and a combusting portion 105 are provided in the electric power generating module 18. An anode exhaust gas exhausted from the anode 10 is supplied to the combusting portion 105 via an anode gas exhaust passage 103. A cathode exhaust gas exhausted from the cathode 11 is supplied to the combusting portion 105 via a passage (cathode gas exhaust passage) 104. The combusting portion 105 combusts the fuel (source gas, source fuel gas?) supplied from the anode 10 by the cathode exhaust gas exhausted from the cathode 11 to heat the evaporating portion 2 and the reforming portion 3 at the activation of the fuel cell system. The combusting portion 105 combusts the anode exhaust gas exhausted from the anode 10 by the cathode exhaust gas exhausted from the cathode 11 to heat the evaporating portion 2 and the reforming portion 3 during the electric power generating operation. The combusting portion 105 is provided with a combustion exhaust gas passage 75, and the combustion exhaust gas including the gas after combusted in the combusting portion 105 and the gas being not combusted is released to the atmosphere via the combustion exhaust gas passage 75. A thermal sensor 33 for detecting the temperature of the reforming portion 3 is provided. An ignition portion 35 serving as a heater for igniting the fuel is provided inside the combusting portion 105. Any construction is applicable as the ignition portion 35 as long as igniting the fuel in the reforming portion 3. An outside air thermal sensor 57 for detecting the temperature of the outside air is provided. Signals from the thermal sensors 33, 57 are inputted into the control portion 100X. The control portion 100X is configured to output a signal to the alarm 102.

During the power generating operation of the fuel cell system, the reformer 2A is heated within the thermal insulation wall 19 to reach the appropriate temperature for the reforming reaction. During the power generating operation, the evaporating portion 2 is heated to evaporate the water. In a case where the solid oxide fuel cell (SOFC) is applied as the fuel cell 1, because the anode exhaust gas exhausted from the anode 10 and the cathode exhaust gas exhausted from the cathode 11 are combusted at the combusting portion 106, the reforming portion 3 and the evaporating portion 2 are simultaneously heated within the electric power generating module 18. As shown in Fig. 11, the source gas passage 6 is provided for supplying the source gas from a gas source 63 to the reformer 2A. The pump 60, the first desulfurizer 100 configured to be installed at high temperature environment, the flow volume sensor (flow meter) 300, and the check valve 500 are provided at the source gas passage 6.

The first desulfurizer 100 contains the first desulfurization agent which includes a porous material of zeolite system as base material, which includes metal, for example, silver. The thermal sensor 150 for detecting the temperature of the desulfurization agent is provided at the first desulfurizer 100. The second desulfurizer 200 includes the second desulfurization agent which includes a porous material of zeolite system as base material. The cathode gas passage 70 for supplying the cathode gas (air) to the cathode 11 is provided at the cathode 11 of the fuel cell 1. A cathode pump 71 serving as a conveying source for conveying the cathode gas is provided at the cathode gas passage 70.

As shown in Fig. 11, the case 5 includes an inlet port 50 and an exhaust port 51 which are in communication with the outside air, and further includes an upper chamber space 52 serving as a first chamber and a lower chamber space 53 serving as a second chamber. The fuel cell 1 is housed in the upper side of the case 5, that is, in the upper chamber space 52 together with the reforming portion 3 and the evaporating portion 2. The tank 4 reserving the liquid-phase water to be reformed in the reforming portion 3 is housed in the lower chamber space 53 of the case 5. A heating portion 40 serving as a heater, for example, an electric heater, is provided at the tank 4. The heating portion 40 is configured to heat the water reserved in the tank 4, and is formed with, for example, an electric heater. For example, when the environmental temperature, for example, the outside air temperature is lower, the water reserved in the tank 4 is heated to be equal to or higher than a predetermined temperature (e.g., 5°C, 10°C, 20°C) on the basis of a command signal from the control portion 100X to restrain the water from freezing. As shown in Fig. 11, the water supply passage 8 which establishes the communication between an outlet port 4p of the tank 4 positioned at the lower chamber space 53 and an inlet port 21 of the evaporating portion 2 positioned at the upper chamber space 52 is provided in the case 5 and serves as a pipe. Because the tank 4 is arranged at a lower level compared to the evaporating portion 2 within the case 5, as shown in Fig. 11, the water supply passage 8 basically extends in an upward-downward direction. As shown in Fig. 11, the water supply passage 8 is configured to supply the water reserved in the tank 4 to the evaporating portion 2 via the inlet port 2i. The water supply passage 8 is provided with a pump 80 serving as a water conveying source for carrying the water reserved in the tank 4 to the evaporating portion 2. The control portion 100X is provided for controlling the pump 80. Further, the control portion 100X controls the pumps 80, 71, 79, and 60.

Upon the actuation of the pump 60 when the fuel cell system is activated, the fuel (source gas) flows from the source gas passage 6 to be supplied to the combusting portion 105 via the evaporating portion 2, the reforming portion 3, the anode gas passage 73, the anode 10 of the fuel cell 1, and the anode gas exhaust passage 103. The cathode fluid (air) is pumped by the cathode pump 71 to flow into the combusting portion 105 via the cathode gas passage 70, the cathode 11, and the cathode gas exhaust passage 104. When the ignition portion 35 is ignited in those circumstances, the gas is combusted at the combusting portion 105, thus heating the reforming portion 3 and the evaporating portion 2. When the pump 80 is actuated in a state where the reforming portion 3 and the evaporating portion 2 are heated, the water in the tank 4 is conveyed in the water supply passage 8 from the outlet port 4p of the tank 4 to the inlet port 2i of the evaporating portion 2, and is heated to be evaporated at the evaporating portion 2. The water vapor rises to the reforming portion 3 together with the fuel supplied from the source gas passage 6. In those circumstances, preferably, the fuel may be in a gas-phase, however, alternatively, the fuel may be in a liquid-phase. At the reforming portion 3, the fuel (source gas) is reformed by means of the vaporized water to be the anode fluid (i.e., the gas including the hydrogen). The anode fluid (anode gas) is supplied to the anode 10 of the fuel cell 1 via the anode gas passage (anode fluid passage) 73. Further, the cathode fluid (i.e., the gas including the oxygen; the air in the case 5) is supplied to the cathode 11 of the fuel cell 1 via the cathode gas passage 70. Thus, the fuel cell 1 generates the electricity. The exhaust gas of the anode fluid exhausted from the anode 10 and the exhaust gas of the cathode fluid exhausted from the cathode 11 flow through the passages 103, 104, respectively, and reach the combusting portion 105 to be combusted therein. The exhaust gas with high temperature is exhausted to the outside of the case 5 via the combustion exhaust gas passage 75.

Upon the actuation of the pump 80 during the power generating operation of the fuel cell system, the water in the tank 4 is conveyed from the outlet port 4p of the tank 4 to the inlet port 2i of the evaporating portion 2, and is heated at the evaporating portion 2 to be vaporized. The vaporized water rises to the reforming portion 3 together with the source gas supplied through the source gas passage 6. At the reforming portion 3, the fuel is reformed by the water vapor to be the anode gas (i.e., the gas including hydrogen). In a case where a methane system gas is applied as the fuel, the anode gas is generated by the steam reforming on the basis of the following formula (1). In those circumstances, the fuel is not limited to the methane system gas..

(1) CH₄ + 2H₂O → 4H₂ + CO₂ CH₄ + H₂O → 3H₂ +CO

The generated anode gas is supplied to the anode 10 of the fuel cell 1 via the anode gas passage 73. Further, the cathode gas (i.e., the gas including the oxygen; air in the case 5) is supplied to the cathode 11 of the fuel cell 1 via the cathode gas passage 70. Accordingly, the fuel cell 1 generates electric power. The exhaust gas with high temperature exhausted from the fuel cell 1 is exhausted to the outside of the case 5 via the combustion exhaust gas passage 75.

The combustion exhaust gas passage 75 is provided with a heat exchanger 76 including a condensing function. The heat exchanger 76 is provided with a passage 78 for pumping the reserved warm water which is connected to a reserving tank 77, and a pump 79. The passage 78 for pumping the reserved warm water includes an outward passage 78a and a return passage 78c. The water in the reserving tank 77 with low temperature is outputted from an outputting port 77p of the reserving tank 77 by an actuation of the pump 79 for pumping the reserved warm water, flows through the outward passage 78a, and reaches the heat exchanger 76 to be heated by a heat exchanging operation of the heat exchanger 76. The water heated at the heat exchanger 76 returns to the reserving tank 77 via a return port 77i by way of the return passage 78c. Thus, the water in the reserving tank 77 is heated to be warm. The vaporized water included in the exhaust gas is condensed at the heat exchanger 76 to be the condensed water. The condensed water is supplied to a water purifier 43, for example, by the gravity via a condensed water passage 42 formed extending from the heat exchanger 76. The water purifier 43 includes a water purification agent 43a, for example, an ion exchange resin, which removes the impurities in the condensed water. The water removed with the impurities is moved to the tank 4 to be reserved therein. When the pump 80 is actuated, the water in the water tank 4 is supplied to the evaporating portion 2 with a high temperature via the water supply passage 8, is vaporized at the evaporating portion 2, is supplied to the reforming portion 3 as the vaporized water, and is consumed in a reforming reaction for reforming the fuel at the reforming portion 3.

The control portion 100X executes the determination processing for determining whether the replacement of the desulfurizer 100 (200), or the desulfurization agent is necessary on the basis of the physical quantity (e.g., dew point) regarding the water vapor contained in the source gas and the cumulative operation time (or the cumulative flowing amount of the source gas) during the electric power generating operation of the fuel cell system. The control portion 100X does not execute the determination processing when the state falls within one of the following states (i), (ii), (iii): (i) when the temperature TH1 of the desulfurizer is lower than the first predetermined temperature Tx; (ii) when the fuel cell system is at the warm-up mode during which the temperature at the reformer 2A and the fuel cell 1 is increased although the fuel cell system does not perform the electric power generating operation; and (iii) when the source gas does not flow in the source gas passage 6.

The present invention is not limited to the constructions of the embodiments and the application examples shown in drawing figures, and can be modified within a range of the scope of the invention. The fuel cell is not limited to the solid oxide fuel cell (SOFC). Alternatively, a polymer electrolyte fuel cell, a phosphoric acid fuel cell (PAFC), and a molten-carbonate fuel cell (MCFC) may be applied as the fuel cell. Namely, as long as including a desulfurizer (100, 200) for desulfurizing the fuel, any fuel cell system is applicable. The types of fuel (source gas, source fuel gas) are not limited, and any gas including the sulfur component, for example, town gas, propane gas, biogas, liquid petroleum gas (LPG), and compressed natural gas (CNG) are applicable. According to the embodiments, the dew point meter 510 is applied. However, alternatively, a humidity sensor for detecting the absolute humidity of the source gas or a relative humidity of the source gas may be applied. According to the embodiments, the buffer 400 and the check valve 500 are provided as shown in Fig. 1. However, alternatively, the buffer 400 and the check valve 500 may be omitted depending on the cases. The alarm may include stopping the operation of the fuel cell system and prohibiting reactivation of the fuel cell system other than an alarming. As a means for heating the desulfurizer 100, according to the embodiment, the heat from the electric power generating module 18 is applied. However, the heating means is not limited, for example, the desulfurizer 100 may be heated by the exhaust gas with high temperature exhausted, for example, from the reformer 2A and the fuel cell 1, or the temperature TH1 at the desulfurizer 100 may be maintained by warm water reserved in the tank and by heat generating parts in the fuel cell system (e.g., power conditioner).

According to the disclosure, the control portion executes the determination processing for determining whether the replacement of the desulfurizer is necessary on the basis of the physical quantity related to the water vapor contained in the source gas during the electric power generating operation by the fuel cell system. In those circumstances, the control portion does not execute the determination processing when the temperature at the desulfurizer is lower than the first predetermined temperature irrespective of whether the electric power generating operation by the fuel cell system is in operation. In this case, because the temperature at the desulfurizer is lower than the first predetermined temperature, the desulfurization agent contained in the desulfurizer has high capacity, or exhibits high performance for adsorbing sulfur component and H₂O, that Is, the capacity of the desulfurization agent is enhanced. Thus, until the enhanced capacity of the desulfurizer for adsorbing the sulfur component and H₂O by the lowered temperature is saturated by adsorbing H₂O, even if the source gas with high dew point level is supplied to the desulfurizer, the desulfurization agent contained in the desulfurizer favorably adsorbs the sulfur component and H₂O. Thus, the outflow of the sulfur component from the desulfurization agent to the downstream is restrained. Accordingly, in order to avoid an erroneous replacement of the desulfurizer, or the desulfurization agent because of the determination error at the determination processing as much as possible, the control portion does not execute the determination processing. Thus, an unnecessary increase in maintenance costs because of the erroneous replacement of the desulfurizer, or the desulfurization agent can be restrained. The first predetermined temperature is set in accordance with types of the fuel cell system, material or volume of the desulfurization agent, and composition of the source gas. For example, the first predetermined temperature is set at a level equal to or lower than 50°C. The control portion is configured to allow the execution of the determination processing when the temperature at the desulfurizer is equal to or higher than the first predetermined temperature.

In a case where a dew point of the source gas supplied to the desulfurizer continuously maintain a high dew point level even when the temperature at the desulfurizer is low level, the desulfurizer is spoiled, or the desulfurization capacity of the desulfurization agent is impaired earlier. On the other hand, in a case where a state of the desulfurizer is changed from a state operated in a high temperature to a state operated in a low temperature, an increment of the adsorbing volume (capacity) because of the change from the high temperature to the low temperature (see Fig. 4) is expected, thus enhancing the desulfurization capacity.

The water vapor sensor serving as a water vapor detection element detects the physical quantity related to the water vapor included in the source gas directly or Indirectly (direct detection or indirect detection). The indirect detection connotes that the water vapor sensor detects the physical quantity related to the water vapor via another parameter. For example, water vapor content included in the source gas, humidity of the source gas, or a dew point of the source gas may be applied as the physical quantity related to the water vapor. Whether the temperature at the desulfurizer is lower than the first predetermined temperature may be detected by a temperature detection element, for example, a temperature sensor, or may be detected by another means.

At a warm-up mode at which the fuel cell system raises temperature of the reformer and/or the fuel cell before starting the electric power generating operation although the electric power generating operation is not performed, the capacity of the desulfurization agent contained in the desulfurizer for adsorbing the sulfur component and H₂O is high because the fuel cell system does not operate the electric power generating operation and the temperature at the desulfurizer is low. Thus, even if the source gas with high dew point level is supplied to the desulfurizer, the outflow of the sulfur component from the desulfurization agent to the downstream can be restrained. Accordingly, it is restrained that the sulfur component affects the reformer and the fuel cell positioned at the downstream of the desulfurizer.

When the source gas does not flow in the source gas passage, the outflow of the sulfur component from the desulfurization agent to the downstream is restrained because the source gas is not flowing irrespective of the level of the dew point. When the source gas does not flow in the source gas passage, the fuel cell system does not perform the electric power generating operation, thus the temperature at the desulfurizer is low. Accordingly, even when a temporal backflow of the water vapor in the reformer enters the desulfurizer, the water vapor can be adsorbed by the desulfurizer. Thus, the sulfur component adsorbed to the desulfurizer can be restrained from being desorbed. Accordingly, it is restrained that the sulfur component affects the reformer and the fuel cell positioned at the downstream of the desulfurizer.

According to the disclosure, even when it is determined that the condition for replacing the desulfurizer, or the desulfurization agent is satisfied at the determination processing, the alarm for replacing the desulfurizer, or the desulfurization agent is not outputted immediately. It is possible that the high dew point of the source gas due to, for example, plumbing for piping or plumbing for maintenance and a backflow of the water vapor from the reformer to the desulfurizer are temporal, and a determination error may occur. Thus, the alarm for replacing the desulfurizer, or the desulfurization agent is not outputted immediately in order to restrain an occurrence of the determination error, thus restraining an erroneous replacement of the desulfurizer because of the determination error. When reactivating the fuel cell system after the operation of the fuel cell system is stopped, a possibility that the water vapor content included in the source gas is returned to be smaller is high, and further, there is a possibility that the backflow of the water vapor from the reformer ends.

According to the disclosure, the control portion re-executes the determination processing. When it is determined that the condition for replacing the desulfurizer, or the desulfurization agent is not satisfied at the re-executed determination processing, the control portion does not replace the desulfurizer, or the desulfurization agent and continues the operation of the fuel cell system. On the other hand, when it is determined that the condition for replacing the desulfurizer, or the desulfurization agent is satisfied at the re-executed determination processing, the control portion outputs the alarm for replacing the desulfurizer, or the desulfurization agent to, for example, a user. The alarm includes a prohibition of reactivation of the fuel cell system other than the alarming. A cumulative operation time from a reference timing, a cumulative flowing amount of the source gas which is supplied to the fuel cell system from the reference timing, and a cumulative flowing amount of the source gas having a dew point equal to or higher than a predetermined level which is supplied to the fuel cell system from the reference timing serve as examples for conditions for replacing the desulfurizer, or the desulfurization agent The reference timing, for example, includes a timing when the fuel cell system is Installed, a timing when the desulfurizer, or the desulfurization agent is replaced, and a timing when the desulfurizer, or the desulfurization agent is regenerated.

According to the disclosure even when it is determined that the condition for replacing the desulfurizer is satisfied, the alarm for replacing the desulfurizer is not outputted immediately, It is possible that the high dew point of the source gas due to, for example, plumbing for piping or plumbing for maintenance and a backflow of the water vapor from the reformer to the desulfurizer are temporal, and a determination error may occur. Thus, the alarm for replacing the desulfurizer is not immediately outputted to, for example, the user because there is a possibility of erroneous replacement of the desulfurizer due to the determination error. In those circumstances, after an elapse of the predetermined time (M) after stopping the operation of the fuel cell system, the plumbing for piping or plumbing for maintenance may be completed and the dew point of the source gas may be returned to the low dew point. Further, after an elapse of the predetermined time (M) after stopping the operation of the fuel cell system, the backflow of the water vapor from the reformer may be ended.

According to the disclosure, even when the condition for replacing the desulfurizer is satisfied at the determination processing, in a case where the electric power generating operation of the fuel cell system is temporarily stopped and where the fuel cell system is reactivated after an elapse of the predetermined time (M) after temporally stopping the operation of the fuel cell system, the control portion re-executes the determination processing. When the determination for replacing the desulfurizer is not outputted at the re-executed determination processing, the control portion does not replace the desulfurizer and continues the operation of the fuel cell system. However, in a case where the determination for replacing the desulfurizer is outputted at the re-executed determination processing, it is preferable that the control portion outputs the alarm for replacing the desulfurizer to, for example, a user or a person in charge of maintenance. The alarm may include prohibiting reactivation of the fuel cell system other than an alarming. The predetermine time (M) may be set in accordance with the composition of the source gas, types of the fuel cell system, and material and volume of the desulfurization agent.

Even in a case where the condition for replacing the desulfurizer is satisfied at the determination processing, the alarm for replacing the desulfurizer is not immediately outputted to the user. It is possible that the high dew point of the source gas due to, for example, plumbing for piping or plumbing for maintenance and a backflow of the water vapor from the reformer to the desulfurizer are temporal, and a determination error may occur. Thus, the control portion temporarily stops the operation of the fuel cell system, and reactivates the fuel cell system after stopped. In a case where the fuel cell system is operated in the warm-up mode, the desulfurizer exhibits (has) the water vapor adsorption capacity and sulfur adsorption capacity because the temperature at the desulfurizer is lower than the predetermined temperature, which is low. In those circumstances, the outflow of the sulfur component to the downstream of the desulfurizer can be restrained. Thus, even when the fuel cell system is reactivated, when the fuel cell system is operated in the warm-up mode at which the temperature at the desulfurizer is low, provided that the source gas with high dew point is supplied to the desulfurizer, the desulfurizer performs favorable desulfurization, thus the control portion does not execute the determination processing.

The control portion re-executes the determination processing in a state where the operation state of the fuel cell system is transited from the warm-up mode to the electric power generating mode. When it is determined that the condition for replacing the desulfurizer is not satisfied at the re-executed determination processing, the control portion does not replace the desulfurizer and continues the operation of the fuel cell system. When the condition for replacing the desulfurizer is satisfied at the re-executed determination processing, the control portion outputs the alarm for replacing the desulfurizer, or the desulfurization agent to the user and the person in charge of maintenance. The alarm may include prohibiting reactivation of the fuel cell system other than an alarming.

When it is determined that the condition for replacing the desulfurizer, or the desulfurization agent is satisfied at the determination processing, the control portion temporarily stops the electric power generating operation of the fuel cell system. After stopping the electric power generating operation of the fuel cell system, the control portion reactivates the fuel cell system. In this case, when the temperature at the desulfurizer is lower than the first predetermined temperature, the control portion does not execute the determination processing. When the temperature at the desulfurizer is equal to or higher than the first predetermined temperature, the control portion re-executes the determination processing. In a case where it is determined that the condition for replacing the desulfurizer is satisfied at the re-executed determination processing, the control portion outputs the alarm for urging the replacements of the desulfurizer.

Even in a case where the condition for replacing the desulfurizer is satisfied at the determination processing, the alarm for replacing the desulfurizer is not immediately outputted to the user. It is possible that the high dew point of the source gas due to, for example, plumbing for piping or plumbing for maintenance and a backflow of the water vapor from the reformer to the desulfurizer are temporal, and a determination error may occur. Thus, the control portion temporarily stops the electric power generating operation of the fuel cell system, and reactivates the fuel cell system after stopped. Because the temperature at the desulfurizer is low and the desulfurizer exhibits (has) the water vapor adsorption capacity and sulfur adsorption capacity immediately after reactivating the stopped fuel cell system, provided that the source gas with high dew point is supplied to the desulfurizer, the desulfurizer performs favorable desulfurization, which restrains the outflow of the sulfur component to the downstream of the desulfurizer. When the temperature at the desulfurizer is lower than the first predetermined temperature, the control portion does not execute the determination processing.

In a case where the temperature at the desulfurizer is raised to be equal to or higher than the first predetermined temperature, the control portion re-executes the determination processing. When it is determined that the condition for replacing the desulfurizer is not satisfied at the re-executed determination processing, the control portion does not replace of the desulfurizer and continues the operation of the fuel cell system. When it is determined that the condition for replacing the desulfurizer, or the desulfurization agent is satisfied at the re-executed determination processing, the control portion outputs the alarm for replacing the desulfurizer to the user and the person in charge of maintenance. The alarm may include prohibiting reactivation of the fuel cell system other than an alarming.

According to the disclosure, when the temperature at the desulfurizer is lower than the first predetermined temperature, the capacity of the desulfurization agent contained in the desulfurizer for adsorbing the sulfur component and H₂O is greater, Accordingly, even when the source gas with high dew point is supplied to the desulfurizer, the sulfur component contained in the source gas and H₂O can be adsorbed to the desulfurization agent in the desulfurizer, thus restraining the outflow of the sulfur component from the desulfurization agent to the downstream. Accordingly, in order to avoid an erroneous replacement of the desulfurizer because of the determination error at the determination processing as much as possible, the control portion does not execute the determination processing.

Thus, the construction of the disclosure contributes to avoid an erroneous replacement of the desulfurizer because of the determination error at the determination processing for replacing the desulfurizer. Accordingly, erroneous replacement of the desulfurizer due to the determination error despite the desulfurizer including sufficient remaining lifetime and desulfurization capacity can be restrained. Thus, an unnecessary increase in maintenance costs can be restrained.

## Claims

1. A fuel cell system, comprising:
a fuel cell (1) including an anode (10) to which an anode gas is supplied and a cathode (11) to which a cathode gas is supplied;
a reformer (2A) for forming the anode gas by reforming a source gas;
a source gas passage (6) for supplying the source gas to the reformer (2A);
a gas conveying source (60) provided at the source gas passage (6) and supplying the source gas to the reformer (2A) via the source gas passage (6);
a desulfurizer (100, 200) provided at the source gas passage (6) for desulfurizing the source gas;
a sensor (510) detecting a physical quantity related to a water vapor included in the source gas directly or indirectly; and
a control portion (100X) configured to execute a determination processing for determining whether a replacement of the desulfurizer (100, 200), or a desulfurization agent contained in the desulfurizer is necessary on the basis of the physical quantity related to the water vapor included in the source gas during an electric power generating operation of the fuel cell system;
wherein the control portion (100X) is configured to not execute the determination processing when temperature at the desulfurizer is lower than a first predetermined temperature (Tx); and
wherein the control portion (100X) is configured to not execute the determination processing at at least one of following cases:
(i) at a warm-up mode at which the fuel cell system raises temperature of the reformer (2A) and/or the fuel cell (1) before starting the electric power generating operation although the electric power generating operation is not performed; and
(ii) when the source gas does not flow in the source gas passage (6).

2. The fuel cell system according to claim 1, when it is determined that a condition for replacing the desulfurizer (100, 200), or the desulfurization agent is satisfied at the determination processing, the control portion (100X) is configured to perform a stop process, to temporarily stop an operation of the fuel cell system, to reactivate the fuel cell system, to re-execute the determination processing, and to output alarm for urging a replacement of the desulfurizer (100, 200), or the desulfurization agent in a case where it is determined that the condition for replacing the desulfurizer (100, 200), or the desulfurization agent is satisfied at the re-executed determination processing.

3. The fuel cell system according to either claim 1 or 2, wherein when it is determined that a condition for replacing the desulfurizer (100, 200), or the desulfurization agent is satisfied at the determination processing, the control portion (100X) is configured to temporarily stop an operation of the fuel cell system, to reactivate the fuel cell system after an elapse of a predetermined time from a stopped timing at which the fuel cell system is stopped, to re-execute the determination processing, and to output alarm for urging a replacement of the desulfurizer (100, 200), or the desulfurization agent in a case where it is determined that the condition for replacing the desulfurizer (100, 200), or the desulfurization agent is satisfied at the re-executed determination processing.

4. The fuel cell system according to either claim 1 or 2, wherein when it is determined that a condition for replacing the desulfurizer (100, 200), or the desulfurization agent is satisfied at the determination processing, the control portion (100X) is configured to temporarily stop an operation of the fuel cell system, to reactivate the fuel cell system after the operation is stopped, to not execute the determination processing when the fuel cell system is operated in a warm-up mode, to re-execute the determination processing in a state where the operation is transited from the warm-up mode to an electric power generating mode, and to output alarm for urging a replacement of the desulfurizer (100, 200), or the desulfurization agent in a case where it is determined that the condition for replacing the desulfurizer (100, 200), or the desulfurization agent is satisfied at the re-executed determination processing.

5. The fuel cell system according to either claim 1 or 2, wherein when it is determined that a condition for replacing the desulfurizer (100, 200), or the desulfurization agent is satisfied at the determination processing, the control portion (100X) is configured to temporarily stop an operation of the fuel cell system, to reactivate the fuel cell system after the operation is stopped, to not execute the determination processing when temperature at the desulfurizer (100, 200) is lower than the first predetermined temperature (Tx), to re-execute the determination processing when the temperature at the desulfurizer (100, 200) is equal to or higher than the first predetermined temperature, and to output alarm for urging a replacement of the desulfurizer (100, 200), or the desulfurization agent in a case where it is determined that the condition for replacing the desulfurizer (100, 200), or the desulfurization agent is satisfied at the re-executed determination processing.

## Patentansprüche

1. Brennstoffzellensystem, mit:
einer Brennstoffzelle (1) mit einer Anode (10), der ein Anodengas zugeführt wird, und einer Kathode (11), der ein Kathodengas zugeführt wird;
einem Reformer (2A) zum Ausbilden des Anodengases durch Reformierung eines Quellgases;
einer Quellgaspassage (6) zum Zuführen des Quellgases zu dem Reformer (2A);
einer Gasbeförderungsquelle (60) an der Quellgaspassage (6) zum Zuführen des Quellgases über die Quellgaspassage (6) zu dem Reformer (2A);
einer Entschwefelungseinrichtung (100, 200) an der Quellgaspassage (6) zum Entschwefeln des Quellgases;
einem Sensor (510) zur direkten oder indirekten Erfassung einer auf den in dem Quellgas enthaltenen Wasserdampf bezogenen physikalischen Größe; und
einem Steuerabschnitt (100X), der zum Ausführen einer Bestimmungsverarbeitung während eines Vorgangs des Brennstoffzellensystems zur Erzeugung von elektrischer Energie dazu eingerichtet ist, um basierend auf der in dem Quellgas enthaltenen auf den Wasserdampf bezogenen physikalischen Größe zu bestimmen, ob ein Austausch der Entschwefelungseinrichtung (100, 200) oder eines in der Entschwefelungseinrichtung enthaltenen Entschwefelungsmittels notwendig ist;
wobei der Steuerabschnitt (100X) dazu eingerichtet ist, die Bestimmungsverarbeitung nicht auszuführen, wenn die Temperatur an der Entschwefelungseinrichtung niedriger als eine erste vorbestimmte Temperatur (Tx) ist; und
wobei der Steuerabschnitt (100X) dazu eingerichtet ist, die Bestimmungsverarbeitung bei zumindest einem der folgenden Fälle nicht auszuführen:
(i) bei einer Aufwärmbetriebsart, bei der das Brennstoffzellensystem die Temperatur des Reformers (2A) und/oder der Brennstoffzelle (1) vor Einleitung des Vorgangs zur Erzeugung von elektrischer Energie erhöht, obwohl der Vorgang zur Erzeugung von elektrischer Energie nicht durchgeführt wird; und
(ii) wenn das Quellgas nicht in die Quellgaspassage (6) fließt.

2. Brennstoffzellensystem gemäß Anspruch 1, wobei, wenn bei der Bestimmungsverarbeitung bestimmt ist, dass eine Bedingung zum Austauschen der Entschwefelungseinrichtung (100, 200) oder des Entschwefelungsmittels erfüllt ist, der Steuerabschnitt (100X) dazu eingerichtet ist,
einen Anhaltevorgang zum vorübergehenden Anhalten eines Betriebs des Brennstoffzellensystems durchzuführen,
das Brennstoffzellensystem zu reaktivieren,
die Bestimmungsverarbeitung erneut auszuführen, und
einen auf einen Austausch der Entschwefelungseinrichtung (100, 200) oder des Entschwefelungsmittels drängenden Alarm auszugeben, falls bei der erneut ausgeführten Bestimmungsverarbeitung bestimmt ist, dass die Bedingung zum Austauschen der Entschwefelungseinrichtung (100, 200) oder des Entschwefelungsmittels erfüllt ist.

3. Brennstoffzellensystem gemäß Anspruch 1 oder 2, wobei, wenn bei der Bestimmungsverarbeitung bestimmt ist, dass eine Bedingung zum Austauschen der Entschwefelungseinrichtung (100, 200) oder des Entschwefelungsmittels erfüllt ist, der Steuerabschnitt (100X) dazu eingerichtet ist,
einen Betrieb des Brennstoffzellensystems vorübergehend anzuhalten,
das Brennstoffzellensystem nach Ablauf einer vorbestimmten Zeit von einem Anhaltezeitpunkt aus, bei der das Brennstoffzellensystem angehalten hat, zu reaktivieren,
die Bestimmungsverarbeitung erneut auszuführen, und
einen auf einen Austausch der Entschwefelungseinrichtung (100, 200) oder des Entschwefelungsmittels drängenden Alarm auszugeben, falls bei der erneut ausgeführten Bestimmungsverarbeitung bestimmt ist, dass die Bedingung zum Austauschen der Entschwefelungseinrichtung (100, 200) oder des Entschwefelungsmittels erfüllt ist.

4. Brennstoffzellensystem gemäß Anspruch 1 oder 2, wobei, wenn bei der Bestimmungsverarbeitung bestimmt ist, dass eine Bedingung zum Austauschen der Entschwefelungseinrichtung (100, 200) oder des Entschwefelungsmittels erfüllt ist, der Steuerabschnitt (100X) dazu eingerichtet ist,
einen Betrieb des Brennstoffzellensystems vorübergehend anzuhalten,
das Brennstoffzellensystem zu reaktivieren, nachdem der Betrieb angehalten ist,
die Bestimmungsverarbeitung nicht auszuführen, wenn das Brennstoffzellensystem in einer Aufwärmbetriebsart betrieben wird,
die Bestimmungsverarbeitung in einem Zustand erneut auszuführen, in dem der Betrieb von der Aufwärmbetriebsart zu einer Betriebsart zur Erzeugung von elektrischer Energie übergegangen ist, und
einen auf einen Austausch der Entschwefelungseinrichtung (100, 200) oder des Entschwefelungsmittels drängenden Alarm auszugeben, falls bei der erneut ausgeführten Bestimmungsverarbeitung bestimmt ist, dass die Bedingung zum Austauschen der Entschwefelungseinrichtung (100, 200) oder des Entschwefelungsmittels erfüllt ist.

5. Brennstoffzellensystem gemäß Anspruch 1 oder 2, wobei, wenn bei der Bestimmungsverarbeitung bestimmt ist, dass eine Bedingung zum Austauschen der Entschwefelungseinrichtung (100, 200) oder des Entschwefelungsmittels erfüllt ist, der Steuerabschnitt (100X) dazu eingerichtet ist,
einen Betrieb des Brennstoffzellensystems vorübergehend anzuhalten,
das Brennstoffzellensystem zu reaktivieren, nachdem der Betrieb angehalten ist,
die Bestimmungsverarbeitung nicht auszuführen, wenn die Temperatur bei der Entschwefelungseinrichtung (100, 200) niedriger als die erste vorbestimmte Temperatur (Tx) ist,
die Bestimmungsverarbeitung erneut auszuführen, wenn die Temperatur bei der Entschwefelungseinrichtung (100, 200) gleich oder höher als die erste vorbestimmte Temperatur ist, und
einen auf einen Austausch der Entschwefelungseinrichtung (100, 200) oder des Entschwefelungsmittels drängenden Alarm auszugeben, falls bei der erneut ausgeführten Bestimmungsverarbeitung bestimmt ist, dass die Bedingung zum Austauschen der Entschwefelungseinrichtung (100, 200) oder des Entschwefelungsmittels erfüllt ist.

## Revendications

1. Système de pile à combustible, comportant :
une pile à combustible (1) comprenant une anode (10) à laquelle un gaz d'anode est délivré et une cathode (11) à laquelle un gaz de cathode est délivré ;
un reformeur (2A) destiné à former le gaz d'anode en reformant un gaz de source ;
un passage de gaz de source (6) destiné à délivrer le gaz de source au reformeur (2A) ;
une source de transport de gaz (60) prévue au niveau du passage de gaz de source (6) et délivrant le gaz de source au reformeur (2A) en passant par le passage de gaz de source (6) ;
un dispositif de désulfuration (100, 200) prévu au niveau du passage de gaz de source (6) afin de désulfurer le gaz de source ;
un capteur (510) qui détecte une quantité physique liée à une vapeur d'eau incluse dans le gaz de source directement ou indirectement ; et
une partie de commande (100X) configurée pour exécuter un traitement de détermination afin de déterminer si un remplacement du dispositif de désulfuration (100, 200), ou d'un agent de désulfuration contenu dans le dispositif de désulfuration est nécessaire sur la base de la quantité physique liée à la vapeur d'eau incluse dans le gaz de source pendant une opération de génération d'énergie électrique du système de pile à combustible ;
dans lequel la partie de commande (100X) est configurée pour ne pas exécuter le traitement de détermination quand la température au niveau du dispositif de désulfuration est inférieure à une première température prédéterminée (Tx) ; et
dans lequel la partie de commande (100X) est configurée pour ne pas exécuter le traitement de détermination dans au moins un des cas suivants :
(i) dans un mode d'échauffement dans lequel le système de pile à combustible élève la température du reformeur (2A) et/ou de la pile à combustible (1) avant de commencer l'opération de génération d'énergie électrique bien que l'opération de génération d'énergie électrique ne soit pas réalisée ; et
(ii) quand le gaz de source ne s'écoule pas dans le passage de gaz de source (6).

2. Système de pile à combustible selon la revendication 1, lorsque l'on détermine qu'une condition de remplacement du dispositif de désulfuration (100, 200), ou de l'agent de désulfuration est satisfaite dans le traitement de détermination, la partie de commande (100X) est configurée pour réaliser un processus d'arrêt, afin d'arrêter temporairement un fonctionnement du système de pile à combustible, pour réactiver le système de pile à combustible, pour exécuter de nouveau le traitement de détermination, et pour délivrer une alarme afin de pousser à un remplacement du dispositif de désulfuration (100, 200), ou de l'agent de désulfuration dans un cas où l'on détermine que la condition pour remplacer le dispositif de désulfuration (100, 200), ou l'agent de désulfuration est satisfait dans le procédé de détermination réalisé de nouveau.

3. Système de pile à combustible selon la revendication 1 ou 2, dans lequel, lorsque l'on détermine qu'une condition pour le remplacement du dispositif de désulfuration (100, 200), ou de l'agent de désulfuration est satisfaite dans le traitement de détermination, la partie de commande (100X) est configurée pour arrêter temporairement un fonctionnement du système de pile à combustible, pour réactiver le système de pile à combustible après l'écoulement d'un temps prédéterminé depuis un instant arrêté où le système de pile à combustible est arrêté, pour exécuter de nouveau le traitement de détermination, et pour délivrer une alarme incitant à un remplacement du dispositif de désulfuration (100, 200), ou de l'agent de désulfuration dans un cas où l'on détermine que la condition pour le remplacement du dispositif de désulfuration (100, 200), ou de l'agent de désulfuration est satisfaite dans le procédé de détermination réalisé de nouveau.

4. Système de pile à combustible selon la revendication 1 ou 2, dans lequel, lorsque l'on détermine qu'une condition pour le remplacement du dispositif de désulfuration (100, 200), ou de l'agent de désulfuration est satisfaite dans le traitement de détermination, la partie de commande (100X) est configurée pour arrêter temporairement un fonctionnement du système de pile à combustible, pour réactiver le système de pile à combustible une fois que le fonctionnement est arrêté, pour ne pas exécuter le traitement de détermination quand le système de pile à combustible fonctionne dans un mode d'échauffement, pour exécuter de nouveau le traitement de détermination dans un état où le fonctionnement passe du mode d'échauffement à un mode de génération d'énergie électrique, et pour délivrer une alarme incitant à un remplacement du dispositif de désulfuration (100, 200), ou de l'agent de désulfuration dans un cas où l'on détermine que la condition pour le remplacement du dispositif de désulfuration (100, 200), ou de l'agent de désulfuration est satisfaite dans le procédé de détermination réalisé de nouveau.

5. Système de pile à combustible selon la revendication 1 ou 2, dans lequel, lorsque l'on détermine qu'une condition pour le remplacement du dispositif de désulfuration (100, 200), ou de l'agent de désulfuration est satisfaite dans le traitement de détermination, la partie de commande (100X) est configurée pour arrêter temporairement un fonctionnement du système de pile à combustible, pour réactiver le système de pile à combustible une fois que le fonctionnement est arrêté, pour ne pas exécuter le traitement de détermination quand la température au niveau du dispositif de désulfuration (100, 200) est inférieure à la température prédéterminée (Tx), pour exécuter de nouveau le traitement de détermination quand la température au niveau du dispositif de désulfuration (100, 200) est égale ou supérieure à la première température prédéterminée, et pour délivrer une alarme incitant au remplacement du dispositif de désulfuration (100, 200), ou de l'agent de désulfuration dans un cas où l'on détermine que la condition pour le remplacement du dispositif de désulfuration (100, 200), ou de l'agent de désulfuration est satisfaite dans le procédé de détermination réalisé de nouveau.
